# EUROPÄISCHE PATENTSCHRIFT

(11) **EP 3 465 165 B1**
(45) Veröffentlichungstag und Bekanntmachung des Hinweises auf die Patenterteilung: **09.06.2021**
(21) Anmeldenummer: 17732139.5
(22) Anmeldetag: 23.06.2017
(51) Int. Cl.: G01N 21/65, G01J 3/44, G01J 3/28, G01J 3/36, G01J 3/12

(54) **VERFAHREN UND VORRICHTUNG ZUR RAMAN-SPEKTROSKOPIE**
METHOD AND DEVICE FOR RAMAN SPECTROSCOPY
PROCÉDÉ ET DISPOSITIF DE SPECTROSCOPIE RAMAN

(30) Priorität: 27.06.2016 DE 102016111747
(43) Veröffentlichungstag der Anmeldung: 10.04.2019
(73) Patentinhaber: Ferdinand-Braun-Institut gGmbH, Leibniz-Institut für Höchstfrequenztechnik, 12489 Berlin (DE)
(72) Erfinder: SUMPF, Bernd, 15745 Wildau (DE); MAIWALD, Martin, 10707 Berlin (DE)
(74) Vertreter: Gulde & Partner
(86) Internationale Anmeldenummer: PCT/EP2017/065555
(87) Internationale Veröffentlichungsnummer: WO 2018/001900

(56) Entgegenhaltungen:
- GB-A- 1 350 950
- JP-A- H0 552 654
- US-A- 5 946 090
- US-A1- 2005 007 583
- US-A1- 2008 030 726
- US-A1- 2016 123 806
- LETOKHOV ET AL: "Laser spectroscopy", OPTICS AND LASER TECHNOLOGY, ELSEVIER SCIENCE PUBLISHERS BV., AMSTERDAM, NL, Bd. 10, Nr. 3, 1. Juni 1978 (1978-06-01), Seiten 129-137, XP022605603, ISSN: 0030-3992, DOI: 10.1016/0030-3992(78)90059-2 [gefunden am 1978-06-01]
- KOBAYASI T ET AL: "TEA UV nitrogen laser and its application to high-sensitive remote pulsed-Raman spectroscopy of atmospheric pollutants", IEEE JOURNAL OF QUANTUM ELECTRONICS, IEEE SERVICE CENTER, PISCATAWAY, NJ, USA, Bd. 8, Nr. 6, 1. Juni 1972 (1972-06-01), Seiten 579-580, XP011405077, ISSN: 0018-9197, DOI: 10.1109/JQE.1972.1077135

## Beschreibung

Die Erfindung betrifft ein Verfahren und eine Vorrichtung zur Raman-Spektroskopie. Insbesondere betrifft die vorliegende Erfindung ein Verfahren und eine Vorrichtung zur Raman-Spektroskopie, bei denen ein direkt frequenzmoduliert und schmalbandig durchstimmbarer Diodenlaser zur Anregung einer Probe über einen breiten spektralen Bereich von Anregungswellenlängen durchgestimmt wird und wobei das Raman-Signal der Probe über mindestens ein schmalbandiges passives Filterelement, welches für mindestens eine durch die Probe Raman-verschobene Anregungswellenlänge transparent ist, so gefiltert wird, dass für mindestens eine Anregungswellenlänge ein Raman-Signal über einen Einkanaldetektor aufgenommen werden kann.

### Technologischer Hintergrund der Erfindung

Die Raman-Spektroskopie wird aufgrund ihrer Eignung zur In-situ- und Online-Analytik zunehmend in der industriellen Prozess- und Umweltmesstechnik eingesetzt. Ein Nachteil hierbei ist jedoch, dass einige Proben in der Praxis infolge Fluoreszenz und/oder aufgrund ihrer Streueigenschaften Spektren liefern, deren Qualität durch einen hohen Untergrund beeinträchtigt wird, insbesondere, wenn mit Messzeiten unterhalb 1 s, ohne Probenvorbereitung und/oder mit kleinbauenden Apparaturen gearbeitet wird.

Typischerweise wird Anregungsstrahlung einer festen, jedoch nahezu beliebigen Anregungswellenlänge in eine zu untersuchende Probe eingekoppelt. Anschließend wird die von der Probe inelastisch gestreute Anregungsstrahlung mittels einer geeigneten Spektroskopie-Anordnung eingesammelt und spektral untersucht. In Abhängigkeit von den speziellen Materialeigenschaften der Probe zeigen sich dabei im aufgenommenen Spektrum einzelne Raman-Linien, welche einen genau bestimmten und für die Probe charakteristischen spektralen Abstand von der Anregungswellenlänge der Anregungsstrahlung aufweisen. Die zur Aufnahme eines Raman-Spektrums verwendeten Spektrometer müssen neben einer hohen spektralen Auflösung auch eine zur Aufnahme von Streuspektren ausreichend hohe Lichtempfindlichkeit aufweisen. Typischerweise weist ein solches Spektrometer als dispersives Element einen hochauflösendes Gitter und einen entsprechend rauscharmen Vielkanaldetektor, beispielsweise eine elektronisch oder mittels flüssigem Stickstoff gekühlte CCD-Kamera, zur Detektion auf. Entsprechende Spektrometer sind oft teuer und eignen sich nicht für den Aufbau besonders kleiner, kompakter und robuster Spektroskopie-Anordnungen.

Die US 2008/030726 A1 offenbart ein Raman-System mit einem durchstimmbaren Halbleiterlaser zur Bereitstellung einer wellenlängenveränderlichen monochromatischen Anregungsstrahlung, wobei die vom Halbleiterlaser emittierte Anregungsstrahlung über einen Wellenlängenbereich von mehr als 50 nm durchstimmbar ist. Die Laserstrahlung wird auf eine zu untersuchende Probe zur Anregung eingestrahlt. Das dabei von der Probe rückgestreute Licht wird anschließend in einem Detektionsstrahlengang, welcher einen Bandpass-Filter zum Herausfiltern eines Raman-Signals der Probe umfasst, gefiltert und von einem Detektor detektiert.

Die JP H05 52654 A offenbart ebenfalls ein Raman-Spektrometer, bei dem die Strahlung einer durchstimmbaren Laserquelle eine Probe zu Raman-Streuung anregt, die an der Probe gestreute Raman-Strahlung über einen schmalbandigen Bandpassfilter gefiltert wird und anschließend von einem Detektor detektiert wird ("Excitation Wavelength Sweep-Type Raman Spectroscope").

Die US 5,946,090 A bezieht sich auf ein spektrometrisches Verfahren und eine spektrometrische Vorrichtung, die einen abstimmbaren Laser als spektrometrische Lichtquelle verwenden, sowie auf ein Verfahren zur spektroskopischen Analyse und eine Vorrichtung zur spektroskopischen Analyse zur Messung von emittiertem Licht, das von einer Probe ausgeht.

Die WO 01/091632 A1 offenbart Verfahren und Vorrichtungen zum nicht-invasiven Bestimmen der Konzentration und Nachweisen von Substanzen in Körperflüssigkeiten mit Raman-Spektroskopie. Die Raman-Streuung von Primärlicht an einer nachzuweisenden Substanz wird genutzt um ein mit der Konzentration der nachzuweisenden Substanz korreliertes Signal zu erhalten. Um Störungen der Messung des Raman-Signals der nachzuweisenden Substanz auszuschließen oder wenigstens zu minimieren, wird das Wellenlängenspektrum des Sekundärlichtes im Bereich des Raman-Spektrums der nachzuweisenden Substanz für zwei verschiedene Primärlichtwellenlängen aufgenommen.

Es ist daher Aufgabe der vorliegenden Erfindung, ein Verfahren und eine Vorrichtung zur Erzeugung und Detektion eines Raman-Spektrums anzugeben, welche nicht auf den aus dem Stand der Technik bekannten komplexen Spektroskopie-Aufbauten beruhen, mit preisgünstigen Komponenten umgesetzt werden können und welche sich zum Aufbau besonders kleiner, kompakter und robuster Anordnungen eignen.

### Zusammenfassung der Erfindung

Diese Aufgaben werden erfindungsgemäß durch die unabhängigen Patentansprüche gelöst. Bevorzugte Ausgestaltungen der Erfindung sind in den Unteransprüchen enthalten.

Das erfindungsgemäße Verfahren zur Raman-Spektroskopie einer zu untersuchenden Probe weist folgende Verfahrensschritte auf: Einstrahlen von Anregungsstrahlung aus mindestens einer Anregungsquelle auf eine zu untersuchende Probe, wobei die zu untersuchende Probe mindestens mit einer ersten Anregungsstrahlung einer ersten Anregungswellenlänge und einer zweiten Anregungsstrahlung einer zweiten Anregungswellenlänge bestrahlt wird, wobei sich mindestens die erste Anregungswellenlänge von der zweiten Anregungswellenlänge unterscheidet; wellenlängenselektive Filterung der von der Probe gestreuten ersten Anregungsstrahlung mittels eines passiven Filterelements, wobei sich eine transmittierte Filterwellenlänge des passiven Filterelements von mindestens der ersten Anregungswellenlänge und der zweiten Anregungswellenlänge unterscheidet, und wobei durch einen der Filterwellenlänge zugeordneten Einkanaldetektor aus der von der Probe gestreuten und gefilterten ersten Anregungsstrahlung eine erste Intensität bestimmt wird; wellenlängenselektive Filterung der von der Probe gestreuten zweiten Anregungsstrahlung mittels des passiven Filterelements, wobei durch den der Filterwellenlänge zugeordneten Einkanaldetektor aus der von der Probe gestreuten und gefilterten zweiten Anregungsstrahlung eine zweite Intensität bestimmt wird, wobei mindestens zwei bestimmte Intensitäten gespeichert werden; wellenlängenselektive Filterung mindestens der von der Probe gestreuten ersten Anregungsstrahlung und der von der Probe gestreuten zweiten Anregungsstrahlung mittels mindestens eines weiteren passiven Filterelements, wobei sich die transmittierten Filterwellenlängen der einzelnen Filterelemente sowohl untereinander als auch jeweils von den einzelnen Anregungswellenlängen der jeweiligen Anregungsstrahlungen unterscheiden, wobei durch je einen der mindestens einen weiteren Filterwellenlänge zugeordneten weiteren Einkanaldetektor aus der von der Probe gestreuten und gefilterten Anregungsstrahlung jeweils mindestens eine erste Intensität und eine zweite Intensität bestimmt werden, wobei mindestens zwei bestimmte Intensitäten für die mindestens eine weitere Filterwellenlänge gespeichert werden; und wobei aus den mindestens vier bestimmten Intensitäten bei mindestens zwei Filterwellenlängen Rückschlüsse auf die Probe gezogen werden und sich die transmittierenden Filterbereiche um die Filterwellenlängen (λF, λF') der jeweiligen Filterelemente (30, 32) zumindest teilweise spektral überlappen.

Demnach wird eine zu untersuchende Probe zunächst mit mindestens zwei Anregungsstrahlungen unterschiedlicher Anregungswellenlängen bestrahlt. Unter Anregungsstrahlung wird dabei insbesondere eine monochromatische Strahlung geringer spektraler Breite bei einer bestimmten Zentralwellenlänge als Anregungswellenlänge verstanden. Eine solche Anregungsstrahlung kann typischerweise von Diodenlasern bzw. Laserdioden im Einmoden-Betrieb emittiert werden. Besonders bevorzugt sind dabei insbesondere Zentralwellenlängen um 785 nm mit spektralen Breiten (FWHM) von unter 1 nm. Die Erzeugung der verschiedenen Anregungsstrahlungen kann beispielsweise durch die Verwendung mehrerer Laserdioden bei unterschiedlichen Emissionswellenlängen als Anregungswellenlängen erfolgen. Weiterhin können die mindestens zwei Anregungsstrahlungen bei verschiedenen Anregungswellenlängen auch durch eine einzelne, in ihrer Emissionswellenlänge veränderbare Laserdiode bzw. durch einen entsprechend spektral durchstimmbaren Diodenlaser erzeugt werden. Dabei kann neben der sprunghaften Einstellung einzelner voneinander beabstandeten Wellenlängen (beispielsweise im Abstand von 1 nm oder 2 nm) auch eine kontinuierliche Abstimmung über einen bestimmten Anregungswellenlängenbereich (beispielsweise über 5 nm, 10 nm, 15 nm oder 20 nm) erfolgen. Im ersten Fall kann dadurch ein entsprechendes diskretes Raman-Spektrum erzeugt werden, während im zweiten Fall ein kontinuierliches Raman-Spektrum über einen der Breite des jeweiligen Anregungswellenlängenbereichs entsprechenden Spektralbereich erzeugt werden kann. Bei einer Zentralwellenlänge von 785 nm entspricht dabei ein Anregungswellenlängenbereich von 10 nm einem messbaren Wellenzahlbereich von etwa 160 cm⁻¹, wobei der spektrale Abstand der einzelnen Messpunkte dieses Wellenzahlbereichs von der jeweiligen Anregungsstrahlung bei der entsprechenden Anregungswellenlänge durch die Filterwellenlänge des Filterelements festgelegt ist. Durch eine entsprechende Auswahl an unterschiedlichen Filterbereichen lässt sich die spektrale Breite des erfassten Raman-Spektrums nahezu beliebig ausweiten.

Die von der Probe gestreute Anregungsstrahlung wird mittels eines passiven Filterelements bei einer bestimmten transmittierenden Filterwellenlänge wellenlängenselektiv gefiltert. Dabei kann es sich dem passiven Filterelement bevorzugt um einen dichroitischen Filter, einen Bragg-Filter oder einen Fabry-Pérot-Filter handeln. Ebenfalls möglich ist die Verwendung eines diffraktiven Gitters, eines Etalons oder eines Mach-Zehnder-Interferometers. Als wellenlängenselektiv wird hierbei insbesondere eine Filterung verstanden, bei der die Filterwellenlänge vom Filterelement mit einer maximalen Intensität transmittiert wird und die an die Filterwellenlänge angrenzenden Spektralbereiche unterdrückt bzw. geblockt werden. Als Filterwellenlänge wird dabei die Zentralwellenlänge des Durchlassbereichs (auch als Transmissionsbereich oder Pass-Band bezeichnet) des Filterelements bezeichnet. Bei symmetrischen Bandpässen ergibt sich dieser aus der spektralen Position der Bandpassmitte. Auch kann eine alternative Bestimmung der Zentralwellenlänge eines Filterelements über das Transmissionsverhalten im Durchlassbereich erfolgen. Eine zweckmäßige Bestimmung einer Zentralwellenlänge kann hier über die Mitte des spektralen Bereiches erfolgen, in dem das Filterelement eine relative Transmission von mindestens 0,9 gegenüber seiner maximalen Transmission im Durchlassbereich aufweist. Diese Definition eignet sich insbesondere zur Bestimmung der Zentralwellenlänge von Filterelementen mit nicht-symmetrischen Filterbereichskanten. Auch die Definition der Breite des Durchlassbereiches eines Filterelements kann über das Transmissionsverhalten erfolgen. Dabei kann ein Durchlassbereich eines Filterelements als der zusammenhängende spektrale Bereich festgelegt werden, innerhalb dessen die relative Transmission bevorzugt mindestens 0,95 gegenüber einer maximalen Transmission im Durchlassbereich beträgt. Weiterhin bevorzugt sind zusammenhängende spektrale Bereiche, in denen die relative Transmission mindestens 0,7; mindestens 0,8; mindestens 0,9; oder mindestens 0,99 beträgt. Eine entsprechende Definition des Sperrbereichs eines Filterelements kann ebenfalls über die Transmissionseigenschaften des Filterelements innerhalb dieses Sperrbereichs erfolgen. Ein Filterelement kann dabei als für eine Wellenlänge sperrend angesehen werden, wenn es für diese Wellenlänge eine relative Transmission von weniger als 0,3; weniger als 0,2; weniger als 0,1; weniger als 0,5; oder weniger als 0,01 in Bezug zur maximalen Transmission des Filterelements im Durchlassbereich seiner Filterwellenlänge aufweist.

Die Filterwellenlänge muss sich erfindungsgemäß von mindestens einer ersten Anregungswellenlänge und einer zweiten Anregungswellenlänge unterscheiden. Das Filterelement kann jedoch auch mehrere voneinander durch Stopp-Bänder (auch als Sperrbereiche bezeichnet) getrennte Durchlassbereiche aufweisen, in diesem Fall muss sich mindestens eine der Filterwellenlängen von mindestens der ersten Anregungswellenlänge und der zweiten Anregungswellenlänge unterscheiden. Dabei ist besonders bevorzugt, dass die Zentralwellenlängen der einzelnen Durchlassbereiche einzelnen Raman-Linien zumindest einer von der Probe gestreuten Anregungsstrahlung entsprechen. Wenn eine Probe bei Bestrahlung mit Anregungsstrahlung einer bestimmten Anregungswellenlänge mehrere charakteristische Raman-Linien generiert, so ist es besonders bevorzugt, wenn die Wellenlängen zumindest einiger dieser Raman-Linien den einzelnen Filterwellenlängen des Filterelements mit mehreren Durchlassbereichen entsprechen.

Der Filterwellenlänge des Filterelements ist ein Detektor zugeordnet, welcher aus der von der Probe gestreuten und durch das Filterelement gefilterten ersten Anregungsstrahlung eine erste Intensität bestimmt und aus der von der Probe gestreuten und durch das Filterelement gefilterten zweiten Anregungsstrahlung eine zweite Intensität bestimmt. Diese Bestimmung kann insbesondere dadurch erfolgen, dass die verschiedenen Anregungsstrahlungen zeitlich versetzt auf die Probe eingestrahlt werden und dadurch entsprechende Intensitätsbestimmungen ebenfalls zeitlich versetzt erfolgen können. Bei Verwendung eines Filterelements mit mehreren Durchlassbereichen ist es jedoch auch möglich, durch eine örtlich versetzte Einstrahlung der verschiedenen Anregungsstrahlungen auf die Probe mit jeweils einem den unterschiedlichen Filterwellenlängen zugeordneten Detektor eine zeitgleiche Intensitätsbestimmung für mehrere Anregungsstrahlungen durchzuführen. Hierdurch können insbesondere die Genauigkeit, die Empfindlichkeit und die Geschwindigkeit des vorgestellten Verfahrens erhöht werden. Bei einem Filterelement mit mehreren Durchlassbereichen kann es sich beispielsweise um ein Filterelement handeln, bei dem die einzelnen Durchlassbereiche bestimmten Positionen auf dessen Oberfläche zugeordnet sind. Insbesondere ist hierbei eine rasterförmige Anordnung der einzelnen Filterbereiche bevorzugt.

Die Idee der vorliegenden Erfindung besteht darin, dass die bei der Raman-Spektroskopie üblicherweise notwenige spektrale Zerlegung einer auszuwertenden Raman-Strahlung nicht über ein zusätzliches Spektrometer, sondern über eine spektral durchstimmbare Anregung in Kombination mit einer wellenlängenselektiven Filterung erfolgt. Da sich der Raman-Effekt, im Gegensatz zur kontinuierlichen Fluoreszenz, besonders durch die dabei auftretenden scharfen Raman-Linien in seinem Spektrum auszeichnet, können bereits aus einer diskreten spektralen Analyse Rückschlüsse auf wesentliche Eigenschaften einer Probe gezogen werden. Dies lässt insbesondere bei unbekannten Proben auch Rückschlüsse auf die Art der Probe zu, da das Raman-Spektrum einer Probe charakteristisch für die Probe ist. Ein weiterer Vorteil des Verfahrens ist dessen prinzipielle Wellenlängenunabhängigkeit in Bezug auf die einzelnen zur Anregung der Probe genutzten Anregungswellenlängen. Während bei einem konventionellen Spektrometer oftmals nur ein begrenzter, durch die Bandbreite des verwendeten dispersiven Elements begrenzter, spektraler Bereich für Untersuchungen zur Verfügung steht, kann bei dem erfindungsgemäßen Verfahren durch einfache Änderung der Anregungswellenlänge der Anregungsstrahlung, beispielsweise durch Verstimmen der Anregungsquelle oder durch deren Austausch, auch ein kostengünstiger und unkomplizierter Wechsel zwischen verschiedenen Spektralbereichen, beispielsweise ein Wechsel von einer optischen hin zu einer nah- bzw. ferninfraroten Anregung, erfolgen. Da es bei der Raman-Spektroskopie im Wesentlichen auf spektrale Abstände und nicht auf spezifische Wellenlängenbereiche ankommt, kann hierdurch mittels eines besonders einfachen und kostengünstigen Austauschs der Anregungsquelle bzw. der Anregungsstrahlung das spektroskopische Fenster jeweils individuell für die einzelnen zu untersuchenden Proben in einen besonderes vorteilsbehafteten Bereich verschoben werden. Hierdurch können insbesondere störende physikalische Effekte, wie beispielsweise allgemeine Fluoreszenzerscheinungen, atomare und molekulare Resonanzen oder besondere spektrale Fenster, bei der Erzeugung und Detektion eines Raman-Spektrums mit berücksichtigt werden.

Es werden mindestens zwei bestimmte Intensitäten gespeichert. Die Anzahl der bestimmten Intensitäten hängt dabei von der Anzahl der verwendeten Anregungsstrahlungen ab. Beispielsweise können auch eine erste Anregungsstrahlung einer ersten Anregungswellenlänge, eine zweite Anregungsstrahlung einer zweiten Anregungswellenlänge und eine dritte Anregungsstrahlung einer dritten Anregungswellenlänge, wobei sich alle drei Anregungswellenlängen voneinander unterscheiden, auf eine Probe eingestrahlt werden. Die von der Probe gestreuten Anregungsstrahlungen können dann mittels eines passiven Filterelements bei einer bestimmten transmittierenden Filterwellenlänge, wobei sich diese Filterwellenlänge von mindestens zwei der drei Anregungswellenlängen unterscheiden kann, gefiltert werden. Anschließend kann durch einen der Filterwellenlänge zugeordneten Detektor aus der von der Probe gestreuten und gefilterten ersten, zweiten und dritten Anregungsstrahlung jeweils eine erste, zweite und dritte Intensität bestimmt werden. Diese Aufzählung ist nach oben hin nicht beschränkt, so dass eine beliebige Anzahl an Anregungsstrahlungen sowohl als diskretes als auch als kontinuierliches Spektrum auf eine Probe eingestrahlt werden und daher auch eine entsprechende Anzahl an Intensitäten bestimmt werden kann. Ebenso ist eine Mischung aus mehreren diskreten und kontinuierlichen Spektren möglich. Die einzelnen Elemente können sich auch zumindest teilweise spektral überlappen.

Es werden aus mindestens zwei bestimmten Intensitäten Rückschlüsse auf die Probe gezogen. Dies kann insbesondere dadurch erfolgen, dass durch das passive Filterelement eine feste Filterwellenlänge vorgegeben wird, wobei sich diese Filterwellenlänge erfindungsgemäß mindestens von einer ersten Anregungswellenlänge und einer zweiten Anregungswellenlänge unterscheidet. Es ist weiterhin bevorzugt, dass zumindest diese beiden Anregungswellenlängen nicht in den vom Filterelement bei der Filterwellenlänge definierten Transmissionsbereich des Filterelements fallen. Anders ausgedrückt liegen zumindest diese beiden Anregungswellenlängen innerhalb eines Stopp-Bandes des Filterelements und werden nicht vom Filterelement transmittiert. Die von der Probe gestreute und gefilterte Anregungsstrahlung ist somit spektral auf den Bereich der festgelegten Filterwellenlänge bzw. der spektralen Breite des entsprechenden Durchlassbereiches des Filterelements begrenzt. Insofern handelt es sich bei der gestreuten und gefilterten Anregungsstrahlung um eine Strahlung, die einen vorgegeben spektralen Abstand zur Anregungswellenlänge der jeweiligen Anregungsstrahlung aufweist. Dieser spektrale Abstand entspricht einer bestimmten Wellenzahl (Kehrwert der entsprechenden Wellenlänge) im Raman-Spektrum und kann mithin ein diskretes Raman-Signal zu dieser ersten Wellenzahl liefern. Wird nun eine zweite Anregungsstrahlung einer zweiten Anregungswellenlänge, welche sich von der ersten Anregungswellenlänge der ersten Anregungsstrahlung unterscheidet, auf diese Probe eingestrahlt, so weicht der spektrale Abstand der zweiten Anregungswellenlänge zur Filterwellenlänge vom spektralen Abstand der ersten Anregungswellenlänge zur Filterwellenlänge ab. Mithin entspricht dieser Abstand einer weiteren Wellenzahl im Raman-Spektrum, so dass ein diskretes Raman-Signal zu dieser zweiten Wellenzahl bestimmt werden kann. Durch Einstrahlung einer ausreichend hohen Anzahl an unterschiedlichen Anregungsstrahlungen mit jeweils voneinander abweichenden Anregungswellenlängen kann somit ein komplettes Raman-Spektrum sowohl aus diskreten Messwerten als auch aus zumindest in Teilen kontinuierlichen Messbereichen erzeugt werden. Insbesondere können auch aus mindestens zwei bestimmten Intensitäten Rückschlüsse auf die Probe gezogen werden.

Dafür ist besonders bevorzugt, dass der spektrale Abstand zwischen mindestens einer Anregungsstrahlung und einer gestreuten und gefilterten Anregungsstrahlung genau einer Raman-Verschiebung der von der Probe gestreuten Anregungsstrahlung entspricht. Rückschlüsse auf die Probe lassen sich insbesondere auch dann ableiten, wenn die genannte Bedingung nur für eine der Anregungsstrahlungen bei einer Anregungswellenlänge erfüllt ist. Die für diese Anregungsstrahlung bestimmte Intensität liefert bei der Detektion der von der Probe gestreuten und vom Filterelement bei der Filterwellenlänge gefilterten Anregungsstrahlung zumindest einen ersten Anhaltspunkt für ein entsprechendes Raman-Signal. Da für die zweite Anregungsstrahlung in diesem Fall keine messtechnisch signifikante Intensität für einen Raman-Prozess bestimmt werden kann, ermöglicht der Vergleich beider Intensitäten ebenfalls Rückschlüsse auf die Probe. Eine vereinfachte Untersuchung einer Probe über lediglich zwei Anregungsstrahlungen bei unterschiedlichen Anregungswellenlängen, d.h. über die Erzeugung und Detektion eines diskreten Raman-Spektrums an zwei spektralen Positionen, kann bereits für eine eineindeutige Probenbestimmung ausreichend sein, zumindest können darüber Rückschlüsse auf die Art möglicher Proben geschlossen werden. Eine weitere Möglichkeit, Rückschlüsse auf die Probe zu ziehen, ist gegeben, wenn die oben genannte Bedingung genau für die erste und die zweite Anregungsstrahlung, d.h. für beide Anregungswellenlängen, erfüllt ist. Da hierbei zwei voneinander unabhängige Raman-Linien untersucht werden, können auch bei schwachen Raman-Signalen Rückschlüsse auf die Probe gezogen werden. Zum Ausschluss von Fehlmessungen sollte jedoch zur Sicherheit noch eine weitere Anregungsstrahlung einer weiteren Anregungswellenlänge mit untersucht werden, wobei die gestreute und gefilterte Anregungsstrahlung einer weiteren Anregungswellenlänge eben gerade nicht einer Raman-Verschiebung der von der Probe gestreuten Anregungsstrahlung entspricht. Um Rückschlüsse auf die Art einer Probe ziehen, ist es daher bevorzugt, dass die Anregungswellenlängen der jeweiligen Anregungsstrahlungen gerade so gewählt werden, dass aus der Gruppe der spektralen Abstände zwischen den einzelnen Anregungsstrahlungen und den entsprechend gestreuten und gefilterten Anregungsstrahlungen mindestens ein Abstand einer Raman-Verschiebung einer von der Probe gestreuten Anregungsstrahlung und ein Abstand eben genau nicht einer Raman-Verschiebung der von der Probe gestreuten Anregungsstrahlung entspricht.

Das erfindungsgemäße Verfahren zur Erzeugung und zur Detektion eines Raman-Spektrums eines zu untersuchenden Mediums weist weiterhin folgende Verfahrensschritte auf: wellenlängenselektive Filterung mindestens der von der Probe gestreuten ersten Anregungsstrahlung und der von der Probe gestreuten zweiten Anregungsstrahlung mittels mindestens eines weiteren passiven Filterelements, wobei sich die transmittierten Filterwellenlängen der einzelnen Filterelemente sowohl untereinander als auch jeweils von den einzelnen Anregungswellenlängen der jeweiligen Anregungsstrahlungen unterscheiden; wobei durch je einen der mindestens einen weiteren Filterwellenlänge zugeordneten weiteren Detektor aus der von der Probe gestreuten und gefilterten Anregungsstrahlung jeweils mindestens eine erste Intensität und eine zweite Intensität bestimmt werden; wobei mindestens zwei bestimmte Intensitäten für die mindestens eine weitere Filterwellenlänge gespeichert werden; wobei aus mindestens vier bestimmten Intensitäten bei mindestens zwei Filterwellenlängen Rückschlüsse auf die Probe gezogen werden.

Das verfahrensgemäße Vorgehen entspricht dabei weitestgehend dem bereits weiter oben beschriebenen Vorgehen. Die jeweiligen Angaben zu den Eigenschaften der Anregungsquellen, Anregungsstrahlungen, Anregungswellenlängen, Filterelementen, Filterwellenlängen und deren funktionaler Zusammenhang gelten entsprechend. Es wird bei dieser Ausführungsform jedoch zusätzlich eine weitere Kombination bestehend aus mindestens einem weiteren Filterelement und jeweils einem einer bestimmten Filterwellenlänge dieses Filterelements zugeordneten Detektor zur Anwendung gebracht. Auch hierbei erfolgt eine Bestimmung von Intensitäten bei unterschiedlichen Kombinationen aus Anregungs- und Filterwellenlängen, wobei aus den bestimmten Intensitäten bei mindestens zwei Filterwellenlängen Rückschlüsse auf die Probe gezogen werden. Insofern entspricht diese Ausführungsform der alternativen Realisierung eines Verfahrens mit einer bereits vorab beschrieben Filteranordnung, bei der ein einzelnes Filterelement mit mehreren Filterwellenlängen und einer, zumindest bevorzugt, entsprechenden Anzahl an den einzelnen Filterwellenlängen individuell zugeordneten Detektoren genutzt wird. Analog dazu ist daher eine vollständige oder zumindest teilweise Umgestaltung besagter Filteranordnung, bei der einzelnen Filterelementen jeweils nur genau eine verfahrenstechnisch relevante Filterwellenlänge zugeordnet wird. Umgekehrt können jedoch auch dem in diesem Ausführungsbeispiel zusätzlich eingeführten mindestens einem weiteren Filterelement analog zum vorhergehenden Ausführungsbeispiel auch durchaus mehrere verfahrenstechnisch relevante Filterwellenlängen zugeordnet werden.

Bei dem erfindungsgemäßen Verfahren werden die einzelnen Filterbereiche der jeweiligen Filterelemente für mindestens zwei Filterbereiche derart miteinander kombiniert, dass sich diese Filterbereiche zumindest teilweise spektral überlappen. Die von den jeweils den einzelnen Filterbereichen über ihre jeweilige Filterwellenlänge zugeordneten Detektoren bestimmten Intensitäten einer spektral durchgestimmten Anregungsquelle bei mehreren Anregungswellenlängen, wobei für mindestens eine dieser Anregungsstrahlungen der spektrale Abstand zwischen dieser Anregungsstrahlung und der gestreuten und innerhalb des Überlappungsbereichs der besagten Filterbereiche spektral gefilterten Anregungsstrahlung genau einer Raman-Verschiebung der von der Probe gestreuten Anregungsstrahlung entspricht, sind dadurch miteinander verknüpft. Dies erlaubt eine Separation der jeweiligen Messhintergründe vom Raman-Signal und kann zur Erhöhung des Signal-Rausch-Verhältnisses bzw. für eine genauere Bestimmung der spektralen Position sowie der Intensität der jeweils untersuchten Raman-Linie herangezogen werden. Insbesondere erlaubt diese Messmethode auch die Verwendung spektral nicht ideal schmalbandiger (Linien- bzw. Delta-Form) Filterelemente und/oder Anregungsquellen. Bevorzugt ist die Verwendung monochromatischer Anregungsquellen und entsprechend schmalbandiger Filterelemente.

Vorzugsweise handelt es sich bei den Anregungsquellen um schmalbandige, kontinuierlich spektral über einen breiten Bereich durchstimmbare und direkt frequenzmodulierte Laserdioden. Dabei bedeutet schmalbandig, dass es sich um Laserdioden handelt, deren emittierte Strahlung auf einen sehr engen spektralen Bereich begrenzt ist. Dies ist insbesondere dann der Fall, wenn es sich um Laserdioden im Einmoden-Betrieb handelt. Hierbei werden typischerweise Linienbreiten unterhalb von 1 nm (FWHM) erreicht. Besonders bevorzugte Linienbreiten (FWHM) liegen dabei bei unter 10 nm, unter 5 nm, unter 1 nm und unter 0,1 nm. Je nach Wellenlängenbereich entspricht dies Frequenzbreiten im unteren THz-Bereich bis hinunter in den MHz-Bereich. Zur Anregung kommen bevorzugt Anregungsstrahlungen mit Anregungswellenlängen im Bereich um 785 nm in Frage, weiterhin Anregungswellenlängen aus dem gesamte nahinfraroten Spektralbereich, dem sichtbaren Spektralbereich sowie dem ultravioletten, infraroten und dem ferninfraroten Spektralbereich. Weiterhin ist bevorzugt, dass die Laserdioden spektral über einen breiten spektralen Bereich durchstimmbar sind. Dies hat den Vorteil, dass eine Anregungsquelle ein breites Spektrum an möglichen Anregungswellenlängen zur Verfügung stellen kann. Insbesondere bei kontinuierlich durchstimmbaren Laserdioden lassen sich mit dem erfindungsgemäßen Verfahren kontinuierliche Raman-Spektren erzeugen und aufnehmen. Insbesondere eine kontinuierliche Abstimmung über mehrere Nanometer ist hierbei besonders bevorzugt. Ebenfalls bevorzugt sind Laserdioden, bei denen unterschiedliche Moden angeregt werden können, so dass beispielsweise auch größere, zumindest diskret zu erreichende Wellenlängenbereich im Abstand mehrerer 10 nm erreicht werden können. Weiterhin bevorzugt sind direkt frequenzmodulierte Laserdioden, bei denen eine Wellenlängenänderung mittels intrinsischer Diodenparameter, beispielsweise über eine Temperatur oder einen Strom, eingestellt werden kann. Vorzugsweise können sogenannte Zweiwellenlängen-Diodenlaser, beispielsweise ein Y-verzweigter Zweiwellenlängen-DBR-Diodenlaser [Maiwald et al., "Dual-Wavelength Y-Branch Distributed Bragg Reflector Diode Laser at 785 Nanometers for Shifted Excitation Raman Difference Spectroscopy", Appl. Spectrosc. 69, 1144-1151 (2015)], eingesetzt werden. Dies ermöglicht eine besonders kompakte und robuste Umsetzung des hier vorgestellten erfindungsgemäßen Verfahrens. Weiterhin ist ebenfalls bevorzugt, dass es sich bei der Anregungsquelle um einen entsprechend schmalbandigen und spektral über einen breiten Bereich durchstimmbaren Diodenlaser handelt. Hierbei kann es sich beispielsweise um ein ECDL-System oder einen spektral durchstimmbaren diodengepumpten Festkörperlaser handeln. Weiterhin eigenen sich beispielsweise entsprechend durchstimmbare Farbstoff- oder Faserlaser bzw. die einzelnen Zinken eines optischen Frequenzkamms.

Vorzugsweise handelt es sich bei passiven Filterelementen um schmalbandige Bandpass-Filter, wobei eine Filterwellenlänge durch die Zentralwellenlänge eines solchen Bandpasses bestimmt ist. Dies können insbesondere dichroitische Filter, Bragg-Filter oder Fabry-Perot-Filter sein. Dabei bedeutet passiv, dass zur Aufnahme eines Raman-Spektrums keine aktive Veränderung der Filtereigenschaften des Filterelements erfolgt, insbesondere jedoch, dass die jeweiligen Filterwellenlängen eines Filterelements zeitinvariant sind. Schmalbandig bedeutet, dass sich die spektrale Breite des Bandpasses auf einen eingeschränkten spektralen Bereich bezieht. Besonders bevorzugte Passbandbreiten (FWHM) liegen hier bei unter 10 nm, unter 5 nm, unter 1 nm und unter 0,1 nm. Je nach Wellenlängenbereich entspricht dies Frequenzbreiten im unteren THz-Bereich bis hinunter in den MHz-Bereich. Wie bereits ausgeführt, kann ein einzelnes Filterelement auch mehrere Pass-Bänder bei unterschiedlichen Filterwellenlängen aufweisen. Unter einem schmalbandigen Bandpass-Filter ist somit ein Filterelement zu verstehen, das im Wesentlich bei der jeweiligen Filterwellenlänge (Zentralwellenlänge des Pass-Bandes) eine hohe Transmission für einfallende Strahlung mit identischer Wellenlänge aufweist, für Strahlung in einem direkt an die jeweilige Filterwellenlänge angrenzenden Bereich jedoch eine Transmission unterdrückt. Dabei ist "direkt" über die Filterbandbreite des jeweiligen Pass-Bandes definiert. Besonders bevorzugt ist dabei, dass sich die Gesamtheit aller auftretenden Stopp-Bänder (spektral zusammenhängender Sperrbereich eines Filterelements), insgesamt mindestens über einen Bereich erstreckt, welcher durch die spektrale Breite der Raman-Anregung, d.h. durch den maximalen spektralen Abstand der nach dem hier vorgestellten erfindungsgemäßen Verfahren verwendeten Anregungswellenlängen, gegeben ist.

Bei den Detektoren handelt es sich um Einkanaldetektoren. Diese können sowohl als einzelne Einkanaldetektoren oder als entsprechend Einkanaldetektoren individuell auslesbare Mehrkanaldetektoren ausgeführt sein. Dies hat den Vorteil, dass hierbei besonders preisgünstige, kompakte und robuste Detektor-Einrichtungen eingesetzt werden können. Die Verwendung einer hochauflösenden, rauscharmen und empfindlichen CCD-Kamera ist nicht erforderlich. Werden Mehrkanaldetektoren über einzelne Kanäle als individuelle Einkanaldetektoren betrieben, so können auch mehrere Kanäle zu je einem Einkanaldetektor zusammengefast werden. Ein unabhängiges Auslesen der einzelnen Kanalbündel sollte möglich sein.

Das erfindungsgemäße Verfahren zur Raman-Spektroskopie erlaubt die Aufnahme von Raman-Spektren unter Verwendung preisgünstiger Komponenten und eignet sich zum Aufbau besonders kleiner, kompakter und robuster Raman-Spektroskopie-Anordnungen. Insbesondere kann durch Auswahl entsprechender Komponenten eine Anpassung des Verfahrens an verschieden bevorzugte Anwendungsfälle erfolgen. Insbesondere kann bei Verwendung von Anregungsstrahlung, welche sich kontinuierlich über einen weiten spektralen Bereich erstreckt, durch Auswahl entsprechender Filterelemente das kontinuierliche Raman-Spektrum einer Probe über einen entsprechend breiten spektralen Bereich aufgenommen werden, der mit klassischen Spektrometer-Anordnungen zur Raman-Spektroskopie vergleichbar ist. Dieses als TERS ("Tunable Excitation Raman Spectroscopy") bezeichnete Verfahren eignet sich daher insbesondere zum Aufbau möglichst robuster und kostengünstiger System für die Raman-Spektroskopie.

Ein weiteres Anwendungsbeispiel ist der Einsatz in einem preisgünstigen und kompakten System zur Untersuchung auf das Vorhandensein bestimmter Zielsubstanzen in den Proben, beispielsweise zur Detektion von bestimmten Gefahrenstoffen mit bereits vorab bekanntem Raman-Spektrum. Hierbei kommt es meist nicht auf die Aufnahme eines vollständigen Raman-Spektrums über einen breiten spektralen Bereich an, sondern es genügt meist bereits die Prüfung einer einzelnen Raman-Linie zur Identifikation einer bestimmten Zielsubstanz in einer verdächtigen Probe. Insbesondere können hierbei bereits durch das Einstrahlen von lediglich zwei unterschiedlichen Anregungsstrahlungen bei zwei unterschiedlichen Anregungswellenlängen Rückschlüsse auf eine Probe gezogen werden. Entspricht insbesondere der spektrale Abstand zwischen der ersten Anregungsstrahlung und der gestreuten und durch ein entsprechendes Filterelement gefilterten Anregungsstrahlung genau einer Raman-Verschiebung der von der Probe gestreuten Anregungsstrahlung, so kann auf das Vorhandensein einer entsprechenden Probe geschlossen werden. Dabei ist insbesondere bevorzugt, wenn es sich bei der zweiten Anregungsstrahlung um eine Strahlung handelt, deren Anregungswellenlänge ebenfalls diese Bedingung für eine weitere Raman-Verschiebung dieser Probe entspricht. Weiterhin ist bevorzugt, dass dies gerade nicht der Fall ist, d.h. bei dem die zweite Anregungswellenlänge eben nicht einer Raman-Verschiebung der Probe entspricht. Dieses als DORAS ("Differential Optical Raman Spectroscopy") bezeichnete Verfahren eignet sich daher besonderes für eine sichere und gezielte Bestimmung einer zu erwartenden Proben. Neben der Verwendung von unterschiedlichen Anregungsquellen bzw. Anregungswellenlängen einer oder mehrerer Anregungsquellen kann dieses Verfahren auch durch den Einsatz von mehreren unterschiedlichen Filterelementen bzw. von einem oder mehreren Filterelementen bei unterschiedlichen Filterwellenlängen in unterschiedlichen Filterbereichen auf die gleichzeitige Prüfung mehrerer Stoffe ausgedehnt werden. Hierbei kann insbesondere auch auf diskrete, nicht-kontinuierlich durchstimmbare Anregungsquellen zur Erzeugung von Anregungsstrahlung bei diskreten Anregungswellenlängen genutzt werden.

Eine Möglichkeit zur Verbesserung der Detektionssicherheit und -genauigkeit des hier vorgestellten Verfahrens besteht im zusätzlichen Vergleich eines solchen erfindungsgemäß gewonnen Raman-Spektrums mit einem Referenzspektrum. Dieses Referenzspektrum kann dabei den allgemeinen Messhintergrund (Hintergrundspektrum) ohne eine Anregung der Probe, d.h. ohne Einstrahlung von Anregungsstrahlung, umfassen. Ebenfalls möglich ist der Vergleich mit einem reinen Fluoreszenzspektrum der Probe oder ein von einer anderen Probe gewonnenes Alternativspektrum. Dies erlaubt insbesondere die Separation des Messhintergrundes oder sonstiger störender Messartefakte. Bei dem besagten Referenzspektrum kann es sich bevorzugt auch um eine auf erfindungsgemäßem Wege oder ein auf einem beliebigen anderen Wege gewonnenes Raman-Spektrum einer zu erwartenden Probe handeln. Hierbei kann durch Vergleich zwischen dem erfindungsgemäß bei einer unbekannten Probe bestimmten Raman-Spektrum und dem bei einer bekannten Probe vorliegenden Referenzspektrum auf die Übereinstimmung bestimmter Merkmale des Raman-Spektrums besagter Proben geprüft werden. Ein Vergleich kann insbesondere durch ein Mittel zur Auswertung erfolgen, welches dazu ausgebildet ist, durch Vergleich eines aus der Bestimmung von mindestens zwei Intensitäten gewonnenen Raman-Spektrums mit einem Referenzspektrum Rückschlüsse auf die Probe zu ziehen. Insbesondere können im erfindungsgemäßen Verfahren durch ein solches Vergleichen Rückschlüsse auf die Probe gezogen werden.

Eine erfindungsgemäße Vorrichtung zur Raman-Spektroskopie ist gemäß dem unabhängigen Anspruch 6 definiert.

### Kurzbeschreibung der Figuren

Die Erfindung wird nachfolgend in Ausführungsbeispielen anhand der zugehörigen Zeichnungen erläutert. Es zeigen:
- Figur 1: eine schematische Darstellung einer Vorrichtung zur Raman-Spektroskopie;
- Figuren 2a - 2d: den zeitlichen Verlauf der Aufnahme eines Raman-Spektrums bei einer Vorrichtung zur Raman-Spektroskopie nach Figur 1
- Figur 3: eine schematische Darstellung zum Einfluss der Filterbandbreite;
- Figur 4: eine schematische Darstellung einer erfindungsgemäßen Vorrichtung zur Raman-Spektroskopie;
- Figur 5: eine schematische Darstellung einer erfindungsgemäßen Vorrichtung zur Raman-Spektroskopie;
- Figur 6: eine schematische Darstellung einer erfindungsgemäßen Vorrichtung zur Raman-Spektroskopie; und
- Figuren 7a - 7c: ein allgemeines Schema zur Raman-Differenz-Spektroskopie bei einer erfindungsgemäßen Vorrichtung zur Aufnahme eines Raman-Spektrums.

### Detaillierte Beschreibung der Erfindung

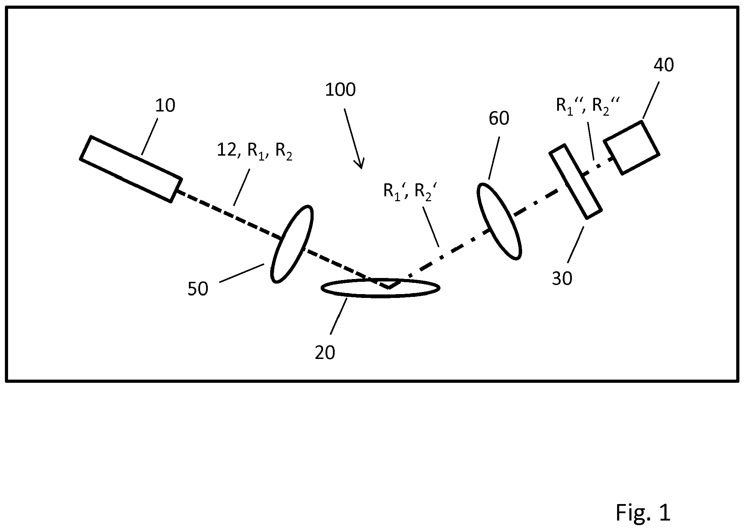

Figur 1 zeigt eine schematische Darstellung einer Vorrichtung zur Raman-Spektroskopie 100. Mittels eines ersten Mittels zur Einkopplung 50 wird die von der Anregungsquelle 10 emittierte Anregungsstrahlung 12 in die zu untersuchende Probe 20 eingekoppelt. Bei der Anregungsquelle 10 kann es sich bevorzugt um eine schmalbandig, kontinuierlich spektral über einen breiten Bereich durchstimmbare und direkt modulierte Laserdiode handeln. Insbesondere kann es sich dabei um eine Vielzahl von Anregungsstrahlungen Rₙ mit n→∞ mit unterschiedlichen Anregungswellenlängen λₙ aus dem zugänglichen spektralen Bereich der Laseremission der Laserdiode handeln. Laserdioden mit einer spektral ohne Modensprünge kontinuierlich durchstimmbaren Laserwellenlänge sind dabei besonders bevorzugt. Die unterschiedlichen Anregungswellenlängen λₙ werden daher beim Durchstimmen des Lasers nacheinander mit einem zeitlich differentiellinkrementellen Versatz in die Probe eingekoppelt. Die von der Probe 20 inelastisch gestreute Anregungsstrahlung Rₙ' wird anschließend durch ein zweites Mittel zur Einkopplung 60 nach spektraler Filterung durch ein passives Filterelement 30 mit einer von den möglichen Anregungswellenlängen λₙ abweichenden Filterwellenlänge λ_{F} in einen Detektor 40 eingekoppelt. Bei dem ersten Mittel zur Einkopplung 50 und dem zweiten Mittel zur Einkopplung 60 handelt es sich vorzugsweise um Abbildungsoptiken, beispielsweise einzelne Linsen, Linsensysteme oder Objektive, welche zur Ein- und Auskopplung von Strahlung in bzw. von der Probe 20 genutzt werden. Bei dem passiven Filterelement 30 kann es sich insbesondere um einen schmalbandigen Bandpass-Filter handelt, wobei die Filterwellenlänge λ_{F} durch die Zentralwellenlänge des Bandpasses bestimmt ist. Bei dem Detektor 40 kann es sich insbesondere um einen Einkanaldetektor handeln. Durch das Filterelement 30 wird die von der Probe 20 gestreute Anregungsstrahlung Rₙ' entsprechend seiner Filtereigenschaften gefiltert. Durch den Detektor 40 wird nach dem Passieren des Filterelements 30 aus der gestreuten und gefilterten Anregungsstrahlung Rₙ" je eine Intensität Iₙ bestimmt. Bei der hier beschriebenen Ausführungsform ergibt sich aus dem Zusammenhang zwischen den einzeln bestimmten Intensitäten Iₙ, dem zeitlichen Verlauf der eingekoppelten Anregungswellenlängen λₙ und der Filterwellenlänge λ_{F} des Filterelements 30 ein vollständiges Raman-Spektrum der Probe 20, welches sich insbesondere aus den bestimmten Intensitäten Iₙ bei den einzelnen spektralen Abständen zwischen der Filterwellenlänge λ_{F} des Filterelements 30 und den einzelnen Anregungswellenlängen λₙ ergibt.

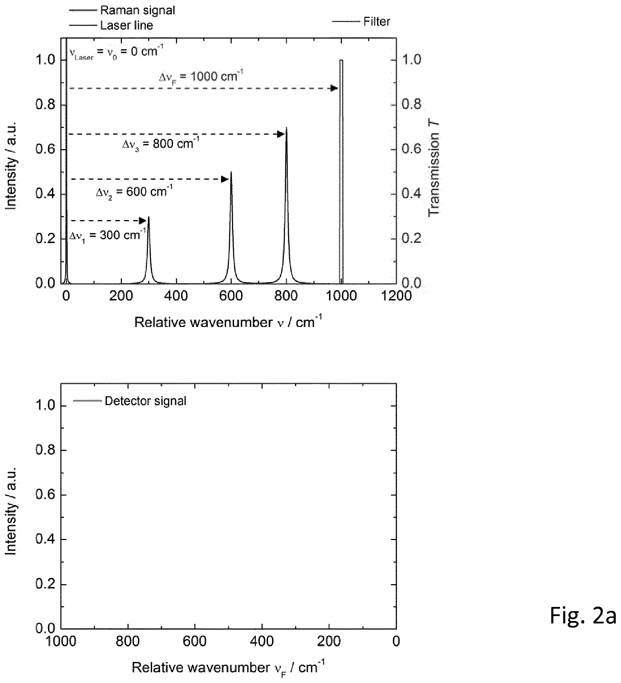

Figuren 2a bis 2d zeigen den zeitlichen Verlauf der Aufnahme eines Raman-Spektrums bei einer Vorrichtung zur Raman-Spektroskopie 100 nach Figur 1. Die hier aufgeführten Bezugszeichen gelten entsprechend. In den gezeigten Diagrammen sind die Beziehungen zwischen den einzelnen Wellenlängen und der zugehörige Verlauf der, durch den der Filterwellenlänge λ_{F} zugeordneten Detektor 40 bestimmten, Intensitätswerte Iₙ dargestellt. Auf den jeweiligen Abszissen der einzelnen Diagramme ist dazu jeweils die relative Wellenzahl in Bezug zu einer bestimmten Bezugswellenlänge λ_{B}, die ohne Beschränkung der Allgemeinheit im Folgenden mit der ersten Anregungswellenlänge λ₁ gleichgesetzt wird, eingezeichnet. In Figur 2a findet sich daher im oberen Diagramm beispielhaft der typische spektrale Verlauf einer ersten Anregungsstrahlung R₁ einer ersten Anregungswellenlänge λ₁ bei einer relativen Wellenzahl von 0 cm⁻¹. Die Anregungsstrahlung R₁ wird in die Probe 20 eingekoppelt und durch die Probe inelastisch gestreut. Die dabei ebenfalls nur als beispielhaft angenommenen Raman-Linien finden sich bei relativen Wellenzahlen von 300 cm⁻¹, 600 cm⁻¹ und 800 cm⁻¹, d.h. in einem festen spektralen Abstand zu den Anregungswellenlängen λₙ. Gegenüber der Anregungsstrahlung R₁ ist dabei typischerweise eine Verbreiterung der einzelne Raman-Profile zu beobachten. Der Durchlassbereich des verwendeten Filterelements 30 ist hier ebenfalls beispielhaft mit eingezeichnet. Durch Wahl einer entsprechenden Filterwellenlänge λ_{F} weist dieser zur Bezugswellenlänge λ_{B}, d.h. zur ersten Anregungswellenlänge λ₁, einen festen spektralen Abstand bei einer relativen Wellenzahl von 1000 cm⁻¹ auf. Dargestellt ist hier beispielhaft ein schmalbandiger Bandpass, welcher eine relative Transmission von 1,0 um die relative Wellenzahl von 1000 cm⁻¹ aufweist und überall sonst vollständig intransparent für die einfallende gestreute Anregungsstrahlung R₁' ist. Das untere Diagramm zeigt die durch den Detektor 40 bestimmten Intensitätswerte Iₙ für eine Anregungsstrahlung Rₙ einer bestimmten Anregungswellenlänge λₙ nach spektraler Filterung durch das Filterelement 30. Die Darstellung in diesem Diagramm ist kumulativ, so dass alle im zeitlichen Verlauf der einzelnen Figuren 2a bis 2d bereits bestimmten Intensitätswerte Iₙ aller vorhergehenden Anregungsstrahlungen Rₙ mit eingezeichnet sind und erhalten bleiben. Dies entspricht sinngemäß einer Speicherung der einzelnen Intensitätswerte Iₙ

Der Figur 2a ist zu entnehmen, dass keine der bei Einkopplung der ersten Anregungsstrahlung R₁ bei der ersten Anregungswellenlänge λ₁ auftretenden Raman-Linien der Probe spektral in das Durchlassfenster des Filterelements 30 bei der Filterwellenlänge λ_{F} fällt. Daher findet keine Transmission der von der Probe 20 gestreuten ersten Anregungsstrahlung R₁' statt, so dass der Detektor 40 keine Intensität als erste Intensität I₁ misst. Daher ist dem unteren Diagramm kein Kurvenverlauf zu entnehmen.

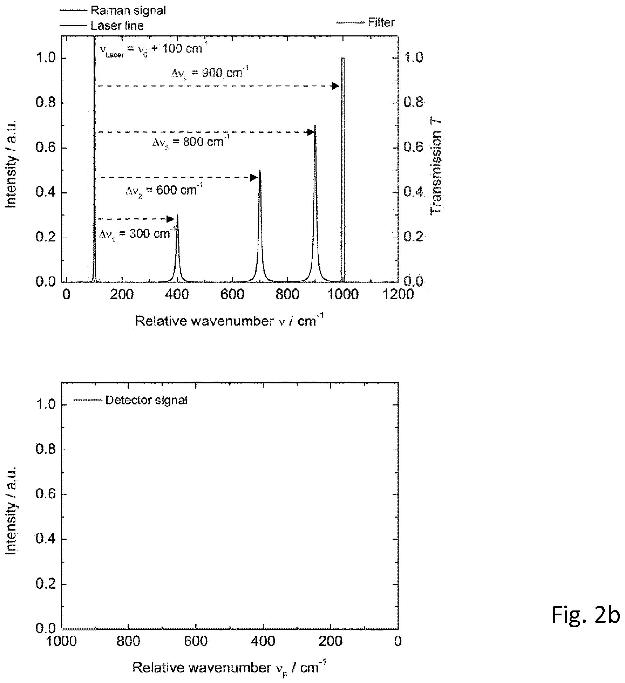

Die Figur 2b zeigt hingegen den Fall, bei dem eine zweite Anregungsstrahlung R₂ einer zweiten Anregungswellenlänge λ₂, wobei sich die zweite Anregungswellenlänge λ₂ von der ersten Anregungswellenlänge λ₁ und damit von der Bezugswellenlänge λ_{B} unterscheidet, eingestrahlt wird. Dabei liegt der spektrale Abstand zwischen der ersten Anregungswellenlänge λ₁ und der zweiten Anregungswellenlänge λ₂ bei einer relativen Wellenzahl von 100 cm⁻¹. Diese Verschiebung der Anregungswellenlänge ändert erst einmal noch nichts an den in Figur 2a dargestellten Verhältnissen in Bezug zum Durchlassbereich des Filterelements 30, so dass auch im dargestellten Fall eine verschwindende zweite Intensität I₂ am Detektor 40 bestimmt wird. Der Wechsel von der ersten Anregungsstrahlung R₁ zur zweiten Anregungsstrahlung R₂ kann durch diskreten Übergang erfolgen. Zur Aufnahme eines kontinuierlichen Spektrums kann jedoch die Anregungsstrahlung Rₙ auch kontinuierlich von der ersten Anregungswellenlänge λ₁ zur zweiten Anregungswellenlänge λ₂ verstimmt werden. In einem solchen Fall liegen zwischen der ersten Anregungswellenlänge λ₁ und der zweiten Anregungswellenlänge λ₂ beliebig viele weitere Anregungsstrahlungen Rₗ mit ihren jeweiligen Anregungswellenlängen λₗ. Zur Vereinfachung der Beschreibung werden im Folgenden nur die in den einzelnen Figuren besonders kenntlich gemachten Anregungsstrahlungen Rₙ einer Zählung unterworfen. Dem unten in Figur 2b dargestellten Diagramm kann jedoch entnommen werden, dass vorliegend bereits eine Vielzahl von Intensitätswerten Iₗ bei unterschiedlichen Anregungsstrahlungen Rₗ bestimmt worden sein müssen.

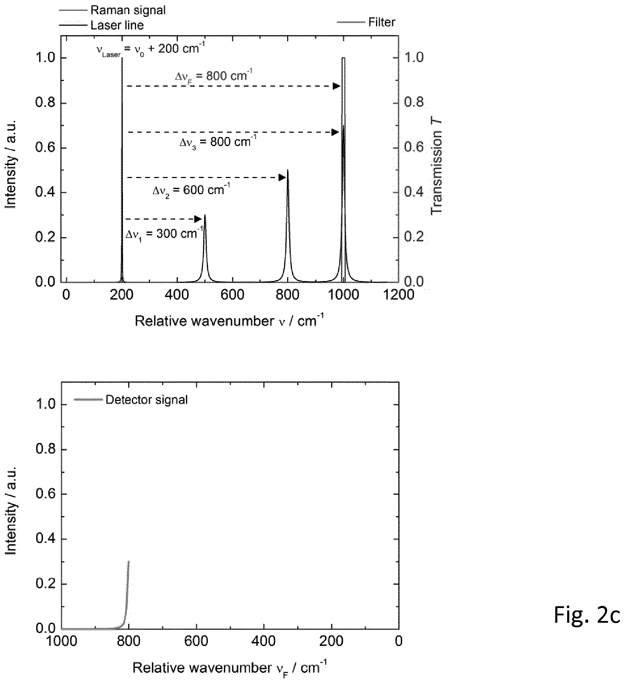

Die Figur 2c zeigt den Fall, dass durch eine weitere spektrale Verstimmung der Emission der Anregungsquelle 10 eine dritte Anregungsstrahlung R₃ einer dritten Anregungswellenlänge λ ₃, welchen hier einen spektralen Abstand zur ersten Anregungswellenlänge λ₁, d.h. zur Bezugswellenlänge λ_{B}, von 200 cm⁻¹ aufweist, eingestrahlt wird, wobei die sich daraus ergebende Raman-Linie mit einer relativen Wellenzahl von 800 cm⁻¹ genau in den Durchlassbereich des Filterelements 30 fällt. Dadurch kann der Detektor 40 entsprechend der Intensität dieser Raman-Linie eine entsprechende dritte Intensität I₃ bestimmen. Diese kann dem bereits gespeicherten Intensitätsverlauf aller vorab bestimmten Intensitäten hinzufügt werden. Wie man dem unteren Diagramm entnehmen kann, können dadurch bei einer kontinuierlichen Verstimmung der Anregungsstrahlung 12 die einzelnen Raman-Linien einer Probe spektral nacheinander über den Durchlassbereich des Filterelements 30 geschoben werden, so dass mit Hilfe des Detektors 40 ein im zugänglichen Spektralbereich kontinuierliches Raman-Spektrum aufgenommen werden kann.

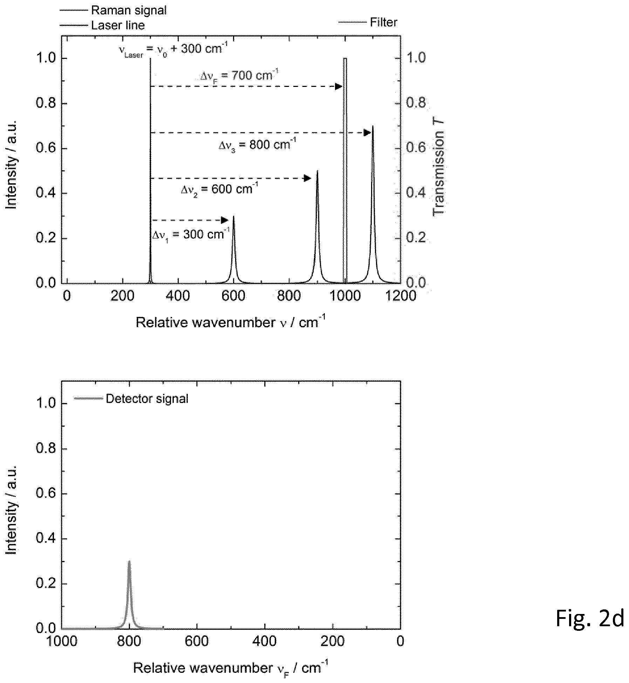

Die Figur 2d zeigt schließlich den Fall, dass durch weiteres spektrales Verstimmen der Emission der Anregungsquelle 10 eine vierte Anregungsstrahlung R₄ einer vierten Anregungswellenlänge λ₄, welche hier einem spektralen Abstand zur ersten Anregungswellenlänge λ₁, d.h. zur Bezugswellenlänge λ_{B}, von 300 cm⁻¹ aufweist, eingestrahlt wird. Die Raman-Linie mit der relativen Wellenzahl von 800 cm⁻¹ wurde bereits vollständig über den Durchlassbereich des Filterelements 30 hinaus verschoben und befindet sich nun spektral im rechtsseitigen Sperrbereich des Filterelements 30. Dem unteren Diagramm kann bereits der vollständige Verlauf dieser Raman-Linie mit seiner genauen spektralen Position entnommen werden.

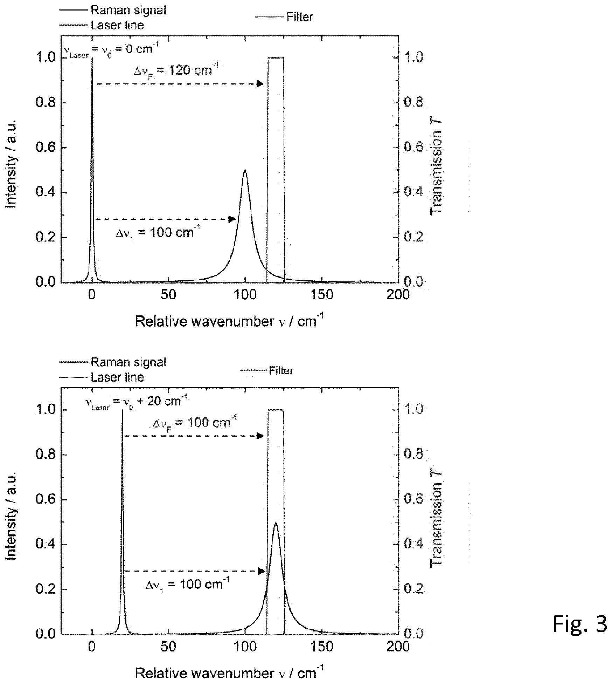

Figur 3 zeigt eine schematische Darstellung zum Einfluss der Filterbandbreite. Die gezeigten Diagramme entsprechen im Wesentlichen den in den Figuren 2a bis 2d dargestellten Sachverhalten, wobei hier lediglich eine einzelne Raman-Linie mit einer relativen Wellenzahl von 100 cm⁻¹ in spektralem Bezug zum Durchlassbereich eines breitbandigen Filterelements 30 dargestellt ist. Im oberen Diagramm befindet sich die Raman-Linie der Probe 20 am Rand des Durchlassbereichs, während im unteren Diagramm die Raman-Linie genau mit der Filterwellenlänge λ_{F} des Durchlassbereichs zusammenfällt. Die Form und Breite der mittels Messung verschiedener Intensitätswerte bestimmten Raman-Linien ergibt sich hierbei mathematisch aus einer Faltung der einzelnen Raman-Profile mit der spezifischen Filterfunktion des Filterelements 30. Weiterhin kann auch das jeweilige spektrale Profil der genutzten Anregungsstrahlungen Rₙ zur Form und Breite der bestimmten Raman-Linien beitragen. Im hier dargestellten Fall liegt insbesondere die spektrale Bandbreite des Durchlassbereiches des Filterelements 30 in der Größenordnung der Linienbreite der dargestellten Raman-Linie. Wie man den beiden Diagrammen entnehmen kann, kommt es bedingt durch die hohe Bandbreite des Filterelements 30 zu einer Mittelwertbildung bei den jeweils bestimmten Intensitätswerten. Diese Mittelwertbildung hat einen entsprechenden Einfluss auf die tatsächlich gemessene Linienbreite bei der Bestimmung eines Raman-Profils. Daher werden zur möglichst genauen Messung eines bestimmten Raman-Profils einer Probe 20 besonders scharfe Linienprofile bei den verschiedenen Anregungsstrahlungen Rₙ und möglichst schmalbandige Filterelemente mit scharfen Bandkanten (Laserlinien-Bandpass) besonders bevorzugt.

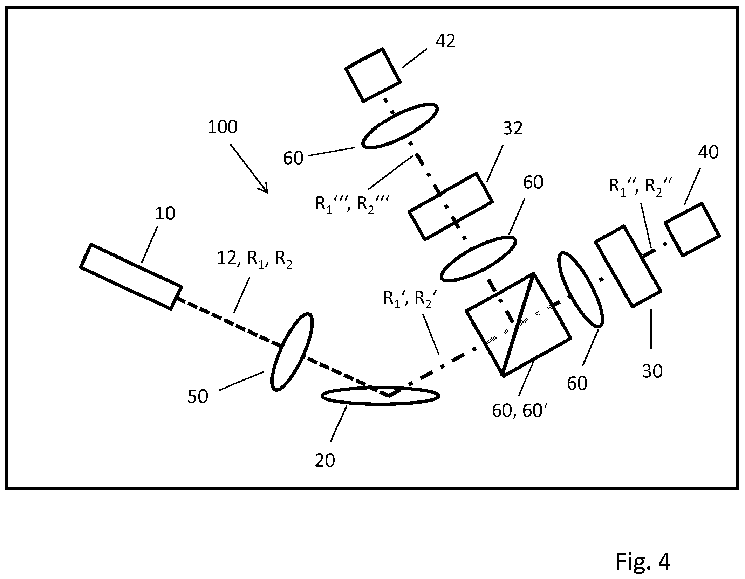

Figur 4 zeigt eine schematische Darstellung einer weiteren erfindungsgemäßen Vorrichtung zur Raman-Spektroskopie 100. Der prinzipielle Aufbau der Vorrichtung entspricht im Wesentlichen der in Figur 1 dargestellten Ausführungsform, mit dem Unterscheid, dass hier ein Filterelement 30 und eine weiteres Filterelement 32 vorhanden sind. Durch diese beiden Filterelemente erfolgt eine wellenlängenselektive Filterung mindestens der von der Probe 20 gestreuten ersten Anregungsstrahlung R₁' und der von der Probe 20 gestreuten zweiten Anregungsstrahlung R₂', wobei sich die transmittierten Filterwellenlängen λ_{F}, λ_{F}' der einzelnen Filterelemente 30, 32 sowohl untereinander als auch jeweils von den einzelnen Anregungswellenlängen λ₁, λ₂ der jeweiligen Anregungsstrahlungen R₁, R₂ unterscheiden können. Durch einen der weiteren Filterwellenlänge λ_{F}' zugeordneten weiteren Detektor 42 wird aus der von der Probe 20 gestreuten und gefilterten Anregungsstrahlung R₁''', R₂''' jeweils mindestens eine erste Intensität I₁' und eine zweite Intensität I₂' bestimmt. Bei dem ersten Mittel zu Einkopplung 50 handelt es sich analog zur Figur 1 um eine entsprechende Abbildungsoptik zur Einkopplung der Anregungsstrahlung 12 auf die Probe 20. Das zweite Mittel zur Einkopplung 60 umfasst einen nicht-polarisierenden Strahlteiler 60', welcher die von der Probe 20 gestreute Anregungsstrahlung R₁', R₂' zur Einkopplung auf zwei Detektoren 40, 42 aufteilt. Das zweite Mittel zur Einkopplung 60 kann jedoch auch zusätzlich noch weitere Abbildungsoptiken sowohl zur Auskopplung der von der Probe 20 gestreuten Anregungsstrahlung R₁', R₂' als auch zur Einkopplung in die jeweiligen Detektoren 40, 42 enthalten. Bei einem Mittel zur Einkopplung handelt es sich stets um die Gesamtheit aller vorhanden Einzelkomponenten, die dem erfindungsgemäßen Zweck einer Einkopplung in die Probe 20 bzw. in den mindestens einen Detektor 40 erfüllen. Es kommt dabei nicht auf eine zusammenhängende Anordnung der jeweiligen Einzelkomponenten eines Mittels zur Einkopplung an. Im vorliegenden Ausführungsbeispiel sind somit alle Einzelkomponenten eines Mittels zur Einkopplung in die beiden Detektoren 40, 42 mit erfasst, die sich zwischen der Probe 20 und beiden Detektoren 40, 42 befinden. Bei einer solchen Anordnung von Einzelkomponenten kommt es nicht auf die Position der Filterelemente 30, 32 an, diese können, wie im vom Strahlteiler reflektierten Strahlengang dargestellt, von dem jeweiligen Mittel zur Einkopplung 60 umschlossen sein. Im Übrigen ist aus der Darstellung in Figur 4 keine Beschränkung des Umfangs der erfindungsgemäßen Vorrichtung zur Raman-Spektroskopie 100 zu entnehmen. Durch die Hinzunahme weiterer Strahlteiler, Filterelemente und Detektoren kann die dargestellte Vorrichtung beliebig in ihrem Umfang erweitert werden. Ebenfalls durch dieses Ausführungsbeispiel mit erfasst sind Anordnungen, bei denen eine Aufteilung der von der Probe 20 gestreuten Anregungsstrahlung R₁', R₂' nicht durch einen Strahlteiler erfolgt, sondern auf eine beliebige andere Art und Weise gelöst wird. Denkbar sind hier beispielsweise eine entsprechende spatiale Aufweitung der von der Probe 20 gestreuten Anregungsstrahlung R₁', R₂', so dass einzelne Teilbereiche der Strahlung den unterschiedlichen Filterelementen mit ihren jeweiligen Detektoren zugeführt werden können. Ebenfalls mit erfasst sind dabei Anordnungen, bei denen mehrere unterschiedliche Filterelemente nebeneinander bzw. in Matrixform innerhalb einer einzelnen Komponente angeordnet sind. Dies gilt entsprechend auch für die einzelnen Detektoren, welche ebenfalls in Zeilen- oder Matrixform innerhalb einer gemeinsamen Komponente vorliegen können. Weiterhin kann ein solches Mehrfarben-Filterelement auch mit einem entsprechenden Mehrkanal-Einzeldetektor fest zu einer gemeinsamen Einheit verbunden sein.

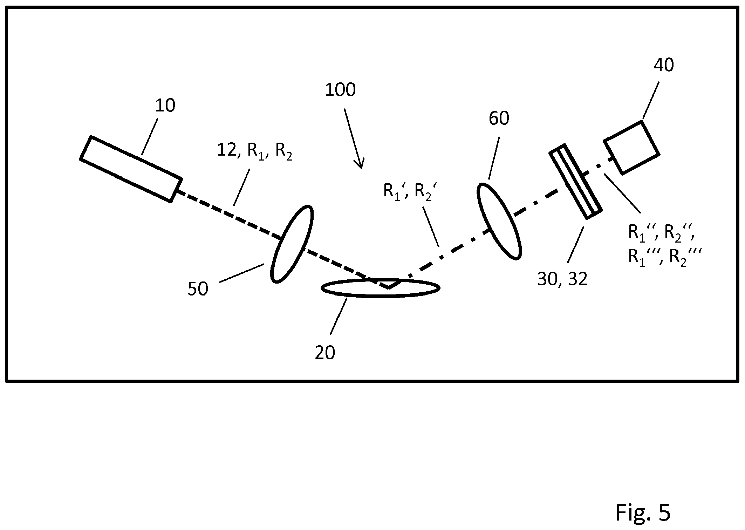

Figur 5 zeigt eine schematische Darstellung einer weiteren erfindungsgemäßen Vorrichtung zur Raman-Spektroskopie 100. Der prinzipielle Aufbau der Vorrichtung entspricht im Wesentlichen der in Figur 1 dargestellten Ausführungsform, mit dem Unterscheid, dass hier das Filterelement 30 eine Filterwellenlänge λ_{F} und eine weitere Filterwellenlänge λ_{F}' aufweist. Dies ist gleichbedeutend mit einer Anordnung, welche aus einem Filterelement 30 mit einer Filterwellenlänge λ_{F} und einem weiteren Filterelement 32 einer weiteren Filterwellenlänge λ_{F}' besteht, welche hintereinander angeordnet sind, und bei der vor einer Detektion eine Filterung der auf den Detektor 40 einfallenden Strahlung durch beide Filterelemente derart erfolgt, dass mindestens ein Durchlassbereich des ersten Filterelements 30 die weitere Filterwellenlänge λ_{F}' des weiteren Filterelements 32 umfasst. Eine zusätzliche Erweiterung auf eine Vielzahl von weiteren Filterelementen mit weiteren Filterwellenlänge bzw. einem Filterelement mit einer Vielzahl von weiteren Filterwellenlänge ist ebenfalls möglich. In der vorliegenden Ausführungsform wird der Detektor 40 gleichzeitig sowohl der Filterwellenlänge λ _{F} als auch der weiteren Filterwellenlänge λ_{F}' zugeordnet. Rückschlüsse auf die Probe 20 können hierbei durch die jeweiligen Verhältnisse der einzelnen Intensitäten gewonnen werden.

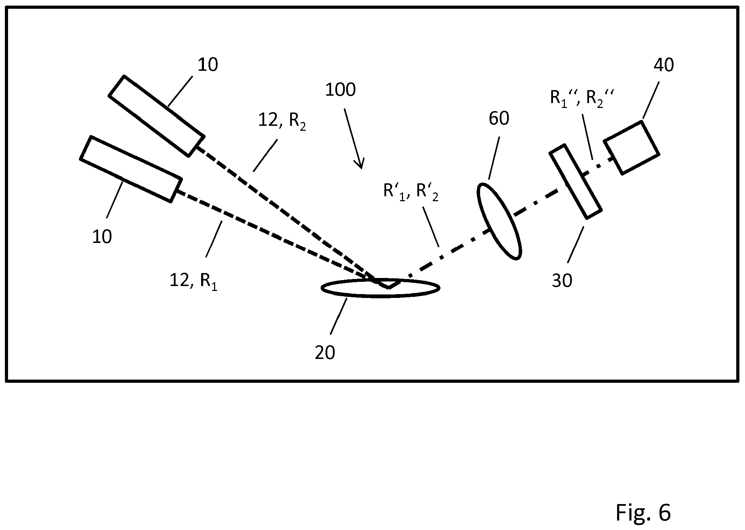

Figur 6 zeigt eine schematische Darstellung einer weiteren Vorrichtung zur Raman-Spektroskopie 100. Auf die Darstellung eines ersten Mittels zur Einkopplung 50 wurde hier verzichtet, eine Integration bleibt freigestellt. Der prinzipielle Aufbau der hier gezeigten Vorrichtung entspricht im Wesentlichen der in Figur 1 dargestellten Ausführungsform, mit dem Unterscheid, dass zwei Anregungsquellen 10 vorhanden sind. Jede dieser Anregungsquellen 10 kann zur Emission von Anregungsstrahlung 12 ausgebildet sein. Insbesondere kann es sich um Anregungsquellen 10 handeln, die jeweils Anregungsstrahlung 12 nur einer einzige Anregungswellenlänge R₁ bzw. R₂ erzeugen und emittieren können oder mindestens eine der Anregungsquellen 10 kann Anregungsstrahlung 12 einer Vielzahl von Anregungswellenlängen emittieren. Die Anzahl an Anregungsquellen 10 kann nach Belieben erweitert werden. Diese können unter den genannten Voraussetzungen frei miteinander kombiniert werden. Eine zeitlich versetzte Einstrahlung einzelner Anregungsstrahlungen Rₙ kann erfolgen. Ebenfalls möglich sind die zeitgleiche Einstrahlung einzelner Anregungsstrahlungen Rₙ sowie eine Kombination dieser beiden Einstrahlungsarten. Dabei können die einzelnen Anregungsstrahlungen Rₙ an einem gemeinsamen Anregungsort in die Probe eingekoppelt werden oder es können für alle oder einzelne Anregungsstrahlungen Rₙ jeweils individuelle Anregungsorte vorgesehen sein. Im Übrigen gelten die gemachten Angaben zur zeitlichen und örtlichen Einstrahlungsweise, soweit anwendbar, für alle genannten Ausführungsformen der vorliegenden Erfindung.

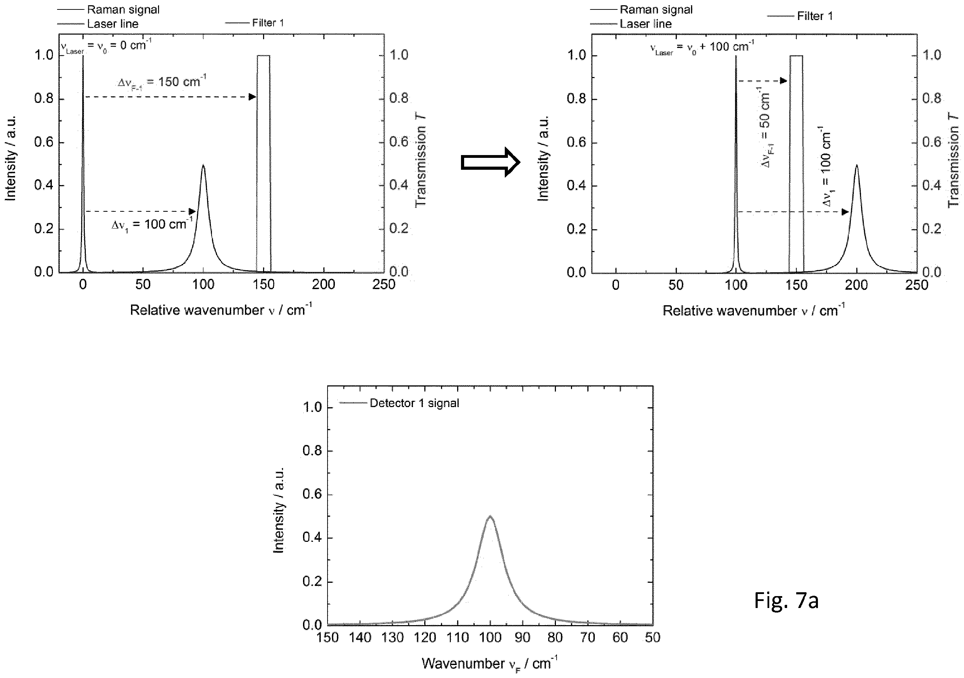

Figuren 7a bis 7c zeigen ein allgemeines Schema zur Raman-Differenz-Spektroskopie bei einer erfindungsgemäßen Vorrichtung zur Raman-Spektroskopie 100. Die in den einzelnen Figuren dargestellten Diagramme entsprechen dabei weitestgehend den in den Figuren 2a bis 2d dargestellten Diagrammen. Alle Angaben in der Beschreibung gelten entsprechend.

In Figur 7a ist analog zu den Figuren 2a und 2d der zeitlichen Verlauf der Aufnahme eines Raman-Spektrums bei einer erfindungsgemäßen Vorrichtung zur Raman-Spektroskopie 100 nach Figur 1 dargestellt. Insbesondere ist im unteren Diagramm der spektrale Intensitätsverlauf einer einzelnen Raman-Linie einer Probe, welche von der eingezeichneten Anregungsstrahlung R₁ einen relativen Wellenzahlabstand von 100 cm⁻¹ aufweist, dargestellt. Die Anregungsstrahlung wurde zur Aufnahme des Spektrums kontinuierlich über einen spektralen Bereich dieser Größe verstimmt. Dabei sind den beiden oben stehenden Diagrammen jeweils der Anfangs- und der Endzustand einer solchen Messung zu entnehmen. Die untersuchte Raman-Linie wurde spektral über den Durchlassbereich des Filterelements 30 verschoben. Der relative Wellenzahlabstand der Filterwellenlänge λ_{F} zur Bezugswellenlänge λ_{B} beträgt 150 cm⁻¹.

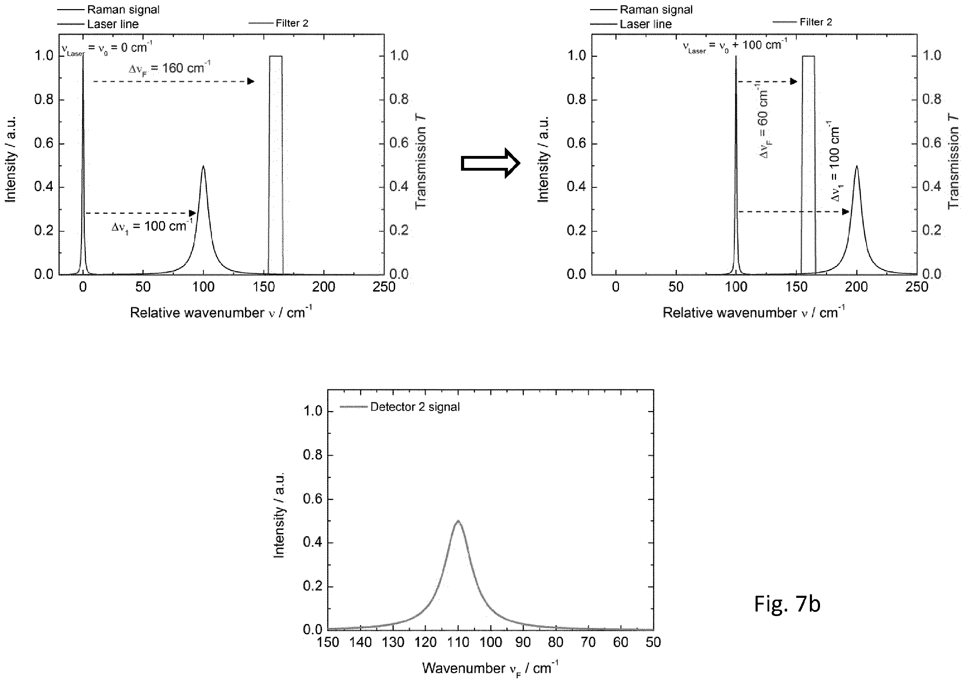

In Figur 7b ist analog zur Figur 7a das Ergebnis einer solchen Messung dargestellt, wobei jedoch die Filterwellenlänge λ_{F}' des verwendeten Filterelements 30 eine relative Wellenzahl von 160 cm⁻¹ zur Bezugswellenlänge λ_{B} aufweist. Dabei ist im direkten Vergleich zum in Figur 7a dargestellten Sachverhalt insbesondere zu beobachten, dass sich die transmittierten Filterbereiche um die Filterwellenlängen λ_{F}, λ_{F}' der jeweiligen Filterelemente 30 teilweise spektral überlappen und die beiden Filterelemente 30, abgesehen von den Filterwellenlängen λ_{F}, λ_{F}', identische Transmissionseigenschaften aufweisen. Dadurch unterscheidet sich die jeweils mit einem der beiden Filter aufgenommen Raman-Spektren im Wesentlichen in deren spektraler Position in Bezug zum spektralen Abstand zwischen der Bezugswellenlänge λ_{B} und den jeweiligen Filterwellenlängen λ_{F}, λ_{F}'. Die spektrale Position ist in Figur 7b gegenüber der entsprechenden Darstellung in Figur 7a somit um eine relative Wellenzahl von 10 cm⁻¹ verschoben. Weitere Abweichungen zwischen den beiden Spektren können sich zusätzlich aus dem jeweiligen Messhintergrund sowie sonstigen auftretenden Messstörungen ergeben.

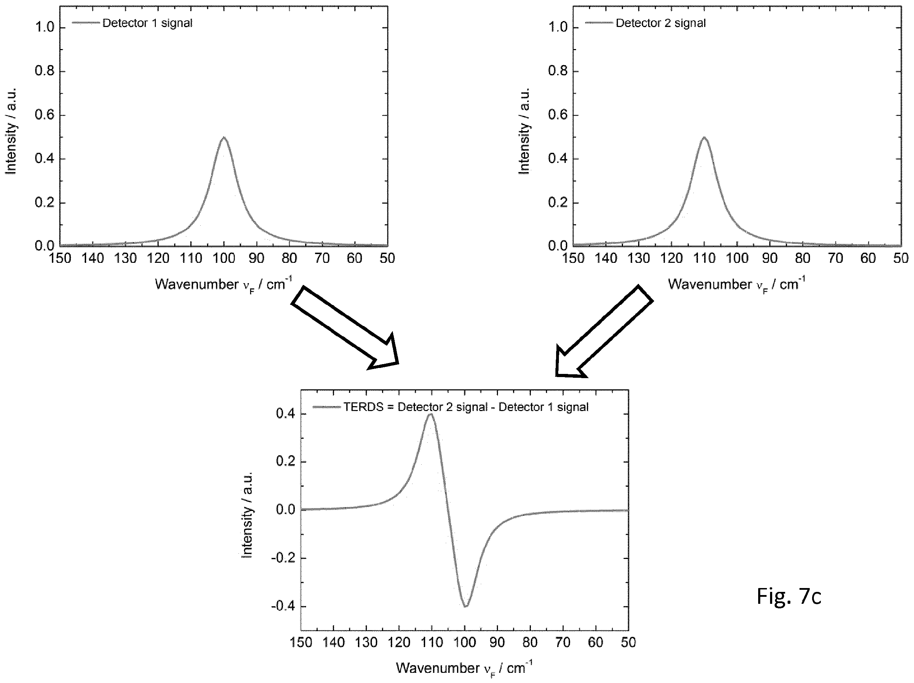

In Figur 7c sind die beiden nach den Figuren 7a und 7b bestimmten Raman-Spektren nochmals im direkten Vergleich dargestellt. Weiterhin ist darunter das sich aus der Differenz dieser beiden Spektren ergebende Differenzspektrum dargestellt. Die Bestimmung eines solchen Differenzspektrums erlaubt es, im Gegensatz zur bloßen Auswertung von aufgenommen Einzelspektren, genauere Rückschlüsse auf die Probe zu ziehen. Insbesondere lassen sich hierbei Einflüsse des Messhintergrundes durch eine Separation des Hintergrundes vom eigentlichen Raman-Signal effektiv herausfiltern. Das Verfahren basiert auf einer entsprechenden Anpassung der sogenannten SERD-Spektroskopie an das hier vorgestellte erfindungsgemäße Verfahren (Shifted-Excitation-Raman-Differenzspektroskopie, DE 10 2009 029 648 B3). Da jedoch eine Bestimmung der einzelne Raman-Spektren nicht mittels eines Spektrometers, sondern durch das erfindungsgemäße Bestrahlen einer Probe mit Anregungsstrahlung verschiedener Anregungswellenlängen erfolgt, wird dieses Verfahren zur Unterscheidung als TERD-Spektroskopie (Tunable-Excitation-Raman-Differenzspektroskopie) bezeichnet.

### Bezugszeichenliste

- 10: Anregungsquelle
- 12: Anregungsstrahlung
- 20: Probe
- 30: Filterelement (mindestens bei der Filterwellenlänge λ_{F})
- 32: weiteres Filterelement (mindestens bei der Filterwellenlänge λ_{F}')
- 40: Detektor (der Filterwellenlänge λ_{F} zugeordnet)
- 42: weiterer Detektor (der Filterwellenlänge λ_{F}' zugeordnet)
- 50: erstes Mittel zur Einkopplung
- 60: zweites Mittel zur Einkopplung
- 60': nicht-polarisierender Strahlteiler
- 100: Vorrichtung zur Raman-Spektroskopie

- λ₁: erste Anregungswellenlänge
- λ₂: zweite Anregungswellenlänge
- R₁: erste Anregungsstrahlung (erster Anregungswellenlänge λ₁)
- R₂: zweite Anregungsstrahlung (zweiter Anregungswellenlänge λ₂)
- R₁': gestreute erste Anregungsstrahlung (erster Anregungswellenlänge λ₁)
- R₂': gestreute zweite Anregungsstrahlung (zweiter Anregungswellenlänge λ₂)
- λ_{F}: Filterwellenlänge
- λ_{F}': weitere Filterwellenlänge
- R₁": gestreute und gefilterte erste Anregungsstrahlung (Filterwellenlänge λ_{F})
- R₂": gestreute und gefilterte zweite Anregungsstrahlung (Filterwellenlänge λ_{F})
- R₁''': gestreute und gefilterte erste Anregungsstrahlung (Filterwellenlänge λ_{F}')
- R₂''': gestreute und gefilterte zweite Anregungsstrahlung (Filterwellenlänge λ_{F}')
- I₁: erste Intensität (Filterwellenlänge λ_{F})
- I₂: zweite Intensität (Filterwellenlänge λ_{F})
- I₁': erste Intensität (Filterwellenlänge λ_{F}')
- I₂': zweite Intensität (Filterwellenlänge λ_{F}')

## Patentansprüche

1. Verfahren zur Aufnahme eines Raman-Spektrums, folgende Verfahrensschritte umfassend:
- Einstrahlen von Anregungsstrahlung (12, R₁, R₂) auf eine zu untersuchende Probe (20), wobei die zu untersuchende Probe (20) mindestens mit einer ersten Anregungsstrahlung (R₁) einer ersten Anregungswellenlänge (λ₁) und einer zweiten Anregungsstrahlung (R₂) einer zweiten Anregungswellenlänge (λ₂) bestrahlt wird, wobei sich mindestens die erste Anregungswellenlänge (λ₁) von der zweiten Anregungswellenlänge (λ₂) unterscheidet,
- wellenlängenselektive Filterung der von der Probe (20) gestreuten ersten Anregungsstrahlung (R₁') mittels eines passiven Filterelements (30), wobei sich eine transmittierte Filterwellenlänge (λ_{F}) des Filterelements (30) von mindestens der ersten Anregungswellenlänge (λ₁) und der zweiten Anregungswellenlänge (λ₂) unterscheidet, und wobei durch einen der Filterwellenlänge (λ_{F}) zugeordneten Einkanaldetektor (40) aus der von der Probe (20) gestreuten und gefilterten ersten Anregungsstrahlung (R₁") eine erste Intensität (I₁) bestimmt wird,
- wellenlängenselektive Filterung der von der Probe (20) gestreuten zweiten Anregungsstrahlung (R₂') mittels des Filterelements (30), wobei durch den der Filterwellenlänge (λ_{F}) zugeordneten Einkanaldetektor (40) aus der von der Probe (20) gestreuten und gefilterten zweiten Anregungsstrahlung (R₂") eine zweite Intensität (I₂) bestimmt wird, wobei mindestens zwei bestimmte Intensitäten (I₁, I₂) gespeichert werden,
- wellenlängenselektive Filterung mindestens der von der Probe (20) gestreuten ersten Anregungsstrahlung (R₁') und der von der Probe (20) gestreuten zweiten Anregungsstrahlung (R₂') mittels mindestens eines weiteren passiven Filterelements (32), wobei sich die transmittierten Filterwellenlängen (λ_{F}, λ_{F}') der einzelnen Filterelemente (30, 32) sowohl untereinander als auch jeweils von den einzelnen Anregungswellenlängen (λ₁, λ₂) der jeweiligen Anregungsstrahlungen (R₁, R₂) unterscheiden, wobei durch je einen der mindestens einen weiteren Filterwellenlänge (λ_{F}') zugeordneten weiteren Einkanaldetektor (42) aus der von der Probe (20) gestreuten und gefilterten Anregungsstrahlung (R₁''', R₂''') jeweils mindestens eine erste Intensität (I₁') und eine zweite Intensität (I₂') bestimmt werden, wobei mindestens zwei bestimmte Intensitäten (I₁', I₂') für die mindestens eine weitere Filterwellenlänge (λ_{F}') gespeichert werden, und
- wobei aus den mindestens vier bestimmten Intensitäten (I₁, I₂, I₁', I₂') bei mindestens zwei Filterwellenlängen (λ_{F}, λ_{F}') durch eine Auswertung, Rückschlüsse auf die Probe (20) gezogen werden und sich die transmittierenden Filterbereiche um die Filterwellenlängen (λ_{F}, λ_{F}') der jeweiligen Filterelemente (30, 32) zumindest teilweise spektral überlappen.

2. Verfahren nach Anspruch 1, wobei es sich bei Anregungsstrahlungsquellen (10) um schmalbandige, kontinuierlich spektral über einen breiten Bereich durchstimmbare und direkt frequenzmodulierte Laserdioden handelt.

3. Verfahren nach Anspruch 1 oder 2, wobei es sich bei Anregungsstrahlungsquellen (10) um Zweiwellenlängen-Diodenlaser, insbesondere Y-verzweigte Zweiwellenlängen-DBR-Diodenlaser, handelt.

4. Verfahren nach einem der vorhergehenden Ansprüche, wobei es sich bei passiven Filterelementen (30, 32) um schmalbandige Bandpass-Filter handelt, wobei eine Filterwellenlänge durch die Zentralwellenlänge eines solchen Bandpasses bestimmt ist.

5. Verfahren nach einem der vorhergehenden Ansprüche, wobei der spektrale Abstand zwischen mindestens einer Anregungsstrahlung (R₁, R₂) und einer gestreuten und gefilterten Anregungsstrahlung (R₁", R₁''', R₂", R₂''') genau einer Raman-Verschiebung der von der Probe (20) gestreuten Anregungsstrahlung (R₁, R₂) entspricht.

6. Vorrichtung zur Raman-Spektroskopie (100), geeignet für die Verwendung in einem Verfahren nach einem der vorhergehenden Ansprüche, umfassend:
- mindestens eine Anregungsquelle (10), dazu ausgebildet, Anregungsstrahlung (12) auf eine zu untersuchende Probe (20) einzustrahlen und die Probe (20) mit mindestens einer ersten Anregungsstrahlung (R₁) einer ersten Anregungswellenlänge (λ₁) und einer zweiten Anregungsstrahlung (R₂) einer zweiten Anregungswellenlänge (λ₂) zu bestrahlen, wobei sich mindestens die erste Anregungswellenlänge (λ₁) von der zweiten Anregungswellenlänge (λ₂) unterscheidet,
- ein passives Filterelement (30), dazu ausgebildet, mindestens die von der Probe (20) gestreute erste Anregungsstrahlung (R₁') und die von der Probe (20) gestreute zweite Anregungsstrahlung (R₂') wellenlängenselektiv zu filtern, wobei sich eine Filterwellenlänge (λ_{F}) des passives Filterelements (30) von mindestens der ersten Anregungswellenlänge (λ₁) und der zweiten Anregungswellenlänge (λ₂) unterscheidet,
- ein dem passiven Filterelement (30) zugeordneter Einkanaldetektor (40), dazu ausgebildet, mindestens eine erste Intensität (I₁) der von der Probe (20) gestreuten und gefilterten ersten Anregungsstrahlung (R₁") und eine zweite Intensität (I₂) der von der Probe (20) gestreuten und gefilterten zweiten Anregungsstrahlung (R₂") zu bestimmen, wobei mindestens zwei bestimmte Intensitäten (I₁, I₂) gespeichert werden,
- ein Mittel zum Speichern und zur Auswertung der bestimmten Intensitäten (I₁, I₂),
- mindestens ein weiteres passives Filterelement (32), wobei sich die transmittierten Filterwellenlängen (λ_{F}, λ_{F}') der einzelnen Filterelemente (30, 32) sowohl untereinander als auch jeweils von den einzelnen Anregungswellenlängen (λ₁, λ₂) der jeweiligen Anregungsstrahlungen (R₁, R₂) unterscheiden und sich die transmittierenden Filterbereiche um die Filterwellenlängen (λ_{F}, λ_{F}') der jeweiligen Filterelemente (30, 32) zumindest teilweise spektral überlappen, und
- je einen dem mindestens einen weiteren passiven Filterelement (32) zugeordneten weiteren Einkanaldetektor (42), dazu ausgebildet, aus der von der Probe (20) gestreuten und gefilterten Anregungsstrahlung (R₁''', R₂''') jeweils mindestens eine erste Intensität (I₁') und eine zweite Intensität (I₂') zu bestimmen, wobei die mindestens zwei Intensitäten (I₁', I₂') für die mindestens eine weitere Filterwellenlänge (λ_{F}') vom Mittel zum Speichern und zur Auswertung gespeichert werden,
- wobei das Mittel zum Speichern und zur Auswertung dazu ausgebildet ist, aus den mindestens vier bestimmten Intensitäten (I₁, I₂, I₁', I₂') bei mindestens zwei Filterwellenlängen (λ_{F}, λ_{F}') Rückschlüsse auf die Probe (20) zu ziehen.

7. Vorrichtung nach Anspruch 6, weiterhin umfassend:
- erstes Mittel zur Einkopplung (50), dazu ausgebildet, die von der Anregungsquelle (10) emittierte Anregungsstrahlung (12, R₁, R₂) in die zu untersuchende Probe (20) einzukoppeln,
- zweites Mittel zur Einkopplung (60), dazu ausgebildet, die von der Probe (20) gestreute Anregungsstrahlung (R₁', R₂') in einen Einkanaldetektor (40) einzukoppeln, wobei das Filterelement (30) derart angeordnet ist, dass die von der Probe (20) gestreute Anregungsstrahlung (R₁', R₂') vor Erreichen des Einkanaldetektors (40) das Filterelement (30) passiert.

8. Vorrichtung nach Anspruch 6 oder 7, wobei es sich bei Anregungsquellen (10) um spektral durchstimmbare und direkt frequenzmodulierte Laserdioden handelt.

9. Vorrichtung nach einem der Ansprüche 6 bis 8, wobei es sich bei Anregungsstrahlungsquellen (10) um Zweiwellenlängen-Diodenlaser, insbesondere Y-verzweigte Zweiwellenlängen-DBR-Diodenlaser, handelt.

## Claims

1. A method for receiving a Raman spectrum, comprising the following method steps:
- irradiating excitation radiation (12, R₁, R₂) onto a sample (20) to be examined, wherein the sample (20) to be examined is irradiated with at least a first excitation radiation (R₁) of a first excitation wavelength (λ₁) and a second excitation radiation (R₂) of a second excitation wavelength (λ₂), wherein at least the first excitation wavelength (λ₁) differs from the second excitation wavelength (λ₂),
- wavelength-selective filtering of the first excitation radiation (R₁') scattered by the sample (20) by means of a passive filter element (30), wherein a transmitted filter wavelength (λ_{F}) of the filter element (30) differs from at least the first excitation wavelength (λ₁) and the second excitation wavelength (λ₂), and wherein a first intensity (I₁) is determined by a single channel detector (40) allocated to the filter wavelength (4) from the first excitation radiation (R₁") scattered and filtered by the sample (20),
- wavelength selective filtering of the second excitation radiation (R₂') scattered by the sample (20) by means of the filter element (30), wherein a second intensity (I₂) is determined by the single channel detector (40) allocated to the filter wavelength (4) from the second excitation radiation (R₂") scattered and filtered by the sample (20), wherein at least two determined intensities (I₁, I₂) are stored,
- wavelength selective filtering at least of the first excitation radiation (R₁') scattered by the sample (20) and of the second excitation radiation (R₂') scattered by the sample (20) by means of at least one further passive filter element (32), wherein the transmitted filter wavelengths (λ_{F}, λ_{F}') of the individual filter elements (30, 32) differ from each other as well respectively as from the individual excitation wavelengths (λ₁, λ₂) of the excitation radiations (R₁, R₂) respectively, wherein at least a first intensity (I₁') and a second intensity (I₂') are each determined by a further single channel detector (42) allocated to the at least one further filter wavelength (λ_{F}') from the excitation radiation (R₁''', R₂''') scattered and filtered by the sample (20), wherein at least two determined intensities (I₁', I₂') are stored for the at least one further filter wavelength(λ_{F}'), and
- wherein, through an evaluation, conclusions about the sample (20) can be drawn from the at least four determined intensities (I₁, I₂, I₁', I₂') at at least two filter wavelengths (λ_{F}, λ_{F}') and the transmitted filter regions around the filter wavelengths (λ_{F}, λ_{F}') of each of the filter elements (30, 32) at least partially overlap each other.

2. The method according to Claim 1, wherein excitation radiation sources (10) are narrow-band laser diodes which are continually spectrally tunable over a wide range and directly frequency modulated.

3. The method according to Claim 1 or 2, wherein excitation radiation sources (10) are dual-wavelength diode lasers, in particular Y-branched dual-wavelength DBR diode lasers.

4. The method according to any one of the preceding claims, wherein passive filter elements (30, 32) are narrow-band bandpass filters, wherein a filter wavelength is determined by the central wavelength of such a bandpass.

5. The method according to any one of the preceding claims, wherein the spectral distance between at least one excitation radiation (R₁, R₂) and a scattered and filtered excitation radiation (R₁", R₁''', R₂", R₂''') corresponds to exactly one Raman shift of the excitation radiation (R₁, R₂) scattered by the probe (20).

6. A device for Raman spectroscopy (100) which is suitable for use in a method according to any one of the preceding claims, comprising:
- at least one excitation source (10) which is designed to irradiate excitation radiation (12) onto a sample (20) to be examined and to irradiate the sample (20) with at least a first excitation radiation (R₁) of a first excitation wavelength (λ₁) and a second excitation radiation (R₂) of a second excitation wavelength (λ₂), wherein at least the first excitation wavelength (λ₁) differs from the second excitation wavelength (λ₂),
- a passive filter element (30) which is designed to wavelength-selectively filter at least the first excitation radiation (R₁') scattered by the sample (20) and the second excitation radiation (R₂') scattered by the sample (20), wherein a filter wavelength (λ_{F}) of the passive filter element (30) differs from at least the first excitation wavelength (λ1) and the second excitation wavelength (λ₂),
- a single channel detector (40) allocated to the passive filter element (30) which is designed to determine at least a first intensity (I₁) of the first excitation radiation (R₁") scattered and filtered by the sample (20) and a second intensity (I₂) of the second excitation radiation (R₂") scattered and filtered by the sample (20), wherein at least two determined intensities (I₁, I₂) are stored,
- a means for storing and evaluating the determined intensities (I₁, I₂),
- at least one further passive filter element (32),
wherein the transmitted filter wavelengths (λ_{F}, λ_{F}') of the individual filter elements (30, 32) differ from each other as well respectively as from the individual excitation wavelengths (λ₁, λ₂) of the excitation radiations (R₁, R₂) respectively, and the transmitted filter regions around the filter wavelengths (λ_{F}, λ_{F}') of each of the filter elements (30, 32) at least partially overlap each other, and
- in each case, one further single channel detector (42) allocated to the at least one further passive filter element (32) which is designed to determine a first intensity (I₁') and a second intensity (I₂'), respectively, from the excitation radiation (R₁''', R₂''') scattered and filtered by the sample (20), wherein the at least two intensities (I₁', I₂') are stored by the means for storing and evaluating for the at least one further filter wavelength (λ_{F}'),
- wherein the means for storing and evaluating is designed to draw conclusions about the sample (20) from the at least four determined intensities (I₁, I₂, I₁', I₂') at at least two filter wavelengths(λ_{F}, λ_{F}').

7. The device according to Claim 6, further comprising:
- a first means for coupling in (50) which is designed to couple the excitation radiation (12, R₁, R₂) emitted from the excitation source (10) in to the sample (20) to be examined,
- a second means for coupling in (60) which is designed to couple the excitation radiation (R₁', R₂') scattered by the sample (20) in to a single channel detector (40), wherein the filter element (30) is arranged such that the excitation radiation (R₁', R₂') scattered by the sample (20) passes through the filter element (30) before reaching the single channel detector (40).

8. The device according to Claim 6 or 7, wherein excitation sources (10) are spectrally tunable and directly frequency modulated laser diodes.

9. The device according to any one of Claims 6 to 8, wherein excitation radiation sources (10) are dual-wavelength diode lasers, in particular Y-branched dual-wavelength DBR diode lasers.

## Revendications

1. Procédé destiné à enregistrer un spectre raman, les étapes de procédé suivantes comprenant:
- l'irradiation d'un rayonnement d'excitation (12, R₁, R₂) sur un échantillon (20) à analyser, l'échantillon (20) à analyser étant irradié au moins avec un premier rayonnement d'excitation (R₁) d'une première longueur d'onde d'excitation (λ₁) et un deuxième rayonnement d'excitation (R₂) d'une deuxième longueur d'onde d'excitation (λ₂), dans lequel au moins la première longueur d'onde d'excitation (λ₁) est différente de la deuxième longueur d'onde d'excitation (λ₂),
- le filtrage sélectif en longueur d'onde du premier rayonnement d'excitation (R₁') diffusé par l'échantillon (20) à l'aide d'un élément de filtrage passif (30), une longueur d'onde de filtrage transmise (λ_{F}) de l'élément de filtrage (30) étant différente au moins de la première longueur d'onde d'excitation (λ₁) et de la deuxième longueur d'onde d'excitation (λ₂), et dans lequel une première intensité (I₁) est définie par un détecteur monocanal (40) associé à la longueur d'onde de filtrage (λ_{F}) à partir du premier rayonnement d'excitation (R₁") diffusé et filtré par l'échantillon (20),
- le filtrage sélectif en longueur d'onde du deuxième rayonnement d'excitation (R₂') diffusé par l'échantillon (20) à l'aide de l'élément de filtrage (30), une deuxième intensité (I₂) étant définie par le détecteur monocanal (40) associé à la longueur d'onde de filtrage(ÀF) à partir du deuxième rayonnement d'excitation (R₂") diffusé et filtré par l'échantillon (20), au moins deux intensités définies (I₁, I₂) étant sauvegardées,
- le filtrage sélectif en longueur d'onde au moins du premier rayonnement d'excitation (R₁') diffusé par l'échantillon (20) et du deuxième rayonnement d'excitation (R₂') diffusé par l'échantillon (20) à l'aide au moins d'un autre élément de filtrage passif (32), les longueurs d'onde de filtrage transmises (λ_{F}, λ_{F}') des éléments de filtrage individuels (30, 32) étant différentes les unes des autres mais également respectivement des longueurs d'onde d'excitation individuelles (λ₁, λ₂) des rayonnements d'excitation respectifs (R₁, R₂), dans lequel respectivement au moins une première intensité (I₁') et une deuxième intensité (I₂') sont définies à chaque fois par un autre détecteur monocanal (42) associé à l'au moins une autre longueur d'onde de filtrage (λ_{F}') à partir du rayonnement d'excitation (R₁''', R₂''') diffusé et filtré par l'échantillon (20), au moins deux intensités définies (I₁', I₂') pour l'au moins une autre longueur d'onde de filtrage (λ_{F}') étant sauvegardées, et
- dans lequel des déductions sont faites sur l'échantillon (20) par une évaluation à partir des au moins quatre intensités définies (I₁, I₂, I₁', I₂') pour au moins deux longueurs d'onde de filtrage (λ_{F}, λ_{F}') et les plages de filtrage transmises se chevauchent au moins partiellement de manière spectrale autour des longueurs d'onde de filtrage (λ_{F}, λ_{F}') des éléments de filtrage respectifs (30, 32).

2. Procédé selon la revendication 1, dans lequel les sources de rayonnement d'excitation (10) sont des diodes lasers à bande étroite à modulation de fréquence directe et déterminable de manière continue spectralement sur une grande plage.

3. Procédé selon la revendication 1 ou 2, dans lequel les sources de rayonnement d'excitation (10) sont des diodes lasers à deux longueurs d'onde, en particulier des diodes lasers DBR à deux longueurs d'onde ramifiées en Y.

4. Procédé selon une quelconque des revendications précédentes, dans lequel les éléments de filtrage passifs (30, 32) sont des filtres passe-bande à bande étroite, dans lequel une longueur d'onde de filtrage est définie par la longueur d'onde centrale d'un tel filtre passe-bande.

5. Procédé selon une quelconque des revendications précédentes, dans lequel la distance spectrale entre au moins un rayonnement d'excitation (R₁, R₂) et un rayonnement d'excitation diffusé et filtré (R₁", R₁''', R₂", R₂''') correspond précisément à un décalage raman du rayonnement d'excitation (R₁, R₂) diffusé par l'échantillon (20).

6. Dispositif de spectroscopie raman (100), adapté à une utilisation dans un procédé selon une quelconque des revendications précédentes, comprenant :
- au moins une source d'excitation (10), conçue pour irradier un rayonnement d'excitation (12) sur un échantillon (20) à analyser et irradier l'échantillon (20) avec au moins un premier rayonnement d'excitation (R₁) d'une première longueur d'onde d'excitation (λ₁) et un deuxième rayonnement d'excitation (R₂) d'une deuxième longueur d'onde d'excitation (λ₂), dans lequel au moins la première longueur d'onde d'excitation (λ₁) est différente de la deuxième longueur d'onde d'excitation (λ₂),
- un élément de filtrage passif (30), conçu pour filtrer de manière sélective en longueur d'onde au moins le premier rayonnement d'excitation (R₁') diffusé par l'échantillon (20) et le deuxième rayonnement d'excitation (R₂') diffusé par l'échantillon (20), une longueur d'onde de filtrage (λ_{F}) de l'élément de filtrage passif (30) étant différente au moins de la première longueur d'onde d'excitation (λ1) et de la deuxième longueur d'onde d'excitation (λ₂),
- un détecteur monocanal (40) associé à l'élément de filtrage passif (30), conçu pour définir au moins une première intensité (I₁) du premier rayonnement d'excitation (R₁") diffusé et filtré par l'échantillon (20) et une deuxième intensité (I₂) du deuxième rayonnement d'excitation (R₂") diffusé et filtré par l'échantillon (20), au moins deux intensités définies (I₁, I₂) étant sauvegardées,
- un moyen de sauvegarde et d'évaluation des intensités définies (I₁, I₂),
- au moins un autre élément de filtrage passif (32), les longueurs d'onde de filtrage transmises (λ_{F}, λ_{F}') des éléments de filtrage individuels (30, 32) étant différentes les unes des autres mais également respectivement des longueurs d'onde d'excitation individuelles (λ₁, λ₂) des rayonnements d'excitation respectifs (R₁, R₂) et les plages de filtrage transmises se chevauchant au moins partiellement de manière spectrale autour des longueurs d'onde de filtrage (λ_{F}, λ_{F}') des éléments de filtrage respectifs (30, 32), et
- à chaque fois un autre détecteur monocanal (42) associé à l'au moins un autre élément de filtrage passif (32) et conçu pour définir à partir du rayonnement d'excitation (R₁''', R₂''') diffusé et filtré par l'échantillon (20) respectivement au moins une première intensité (I₁') et une deuxième intensité (I₂'), les au moins deux intensités (I₁', I₂') étant sauvegardées par le moyen de sauvegarde et d'évaluation pour l'au moins une autre longueur d'onde de filtrage (λ_{F}'),
- dans lequel le moyen de sauvegarde et d'évaluation est conçu pour faire des déductions sur l'échantillon (20) à partir des au moins quatre intensités définies (I₁, I₂, I₁', I₂') pour au moins deux longueurs d'onde de filtrage (λ_{F}, λ_{F}').

7. Dispositif selon la revendication 6, comprenant en outre :
- un premier moyen de couplage (50), conçu pour coupler le rayonnement d'excitation (12, R₁, R₂) émis par la source d'excitation (10) dans l'échantillon (20) à analyser,
- un second moyen de couplage (60), conçu pour coupler le rayonnement d'excitation (R₁', R₂') diffusé par l'échantillon (20) dans un détecteur monocanal (40), l'élément de filtrage (30) étant disposé de telle sorte que le rayonnement d'excitation (R₁', R₂') diffusé par l'échantillon (20) passe l'élément de filtrage (30) avant d'atteindre le détecteur monocanal (40).

8. Dispositif selon la revendication 6 ou 7, dans lequel les sources d'excitation (10) sont des diodes lasers à modulation de fréquence directe et déterminable spectralement.

9. Dispositif selon une des revendications 6 à 8, dans lequel les sources de rayonnement d'excitation (10) sont des diodes lasers à deux longueurs d'onde, en particulier des diodes lasers DBR à deux longueurs d'onde ramifiées en Y.
